(19) Europäisches Patentamt
European Patent Office
Office européen des brevets

(11) EP 2 669 314 B1

(12) # FASCICULE DE BREVET EUROPEEN

(45) Date de publication et mention de la délivrance du brevet:
**19.11.2014 Bulletin 2014/47**

(51) Int Cl.:
***C08G 71/04*** *(2006.01)*

(21) Numéro de dépôt: **13169960.5**

(22) Date de dépôt: **31.05.2013**

(54) **Procédé de synthèse d'un composé poly-hydroxy-uréthane glycérilique et composé poly-hydroxy-uréthane glycérilique**

Verfahren zur Herstellung eines glycerinbasierten Polyhydroxyurethanes und glycerinbasiertes Polyhydroxyurethan

Method for the preparation of glycerine-based poly(hydroxy urethane) compounds and glycerine-based poly(hydroxy urethane) compounds

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.05.2012 FR 1255061**

(43) Date de publication de la demande:
**04.12.2013 Bulletin 2013/49**

(73) Titulaires:
- **Organisation Nationale Interprofessionnelle des Graines et Fruits Oleagineux (O.N.I.D.O.L.)**
  **75008 Paris (FR)**
- **Institut National Polytechnique de Toulouse**
  **31400 Toulouse (FR)**
- **INSTITUT NATIONAL DE LA RECHERCHE AGRONOMIQUE**
  **75007 Paris (FR)**

(72) Inventeurs:
- **Mouloungui, Zéphirin**
  **31200 TOULOUSE (FR)**
- **Candy, Laure**
  **31400 TOULOUSE (FR)**
- **Nohra, Bassam**
  **31400 TOULOUSE (FR)**
- **Blanco, Jean-François**
  **31320 PECHABOU (FR)**
- **Raoul, Yann**
  **02650 CREZANCY (FR)**

(74) Mandataire: **Cabinet BARRE LAFORGUE & associés**
**35, rue Lancefoc**
**31000 Toulouse (FR)**

(56) Documents cités:
**US-A- 5 175 231**

- **KIHARA NOBUHIRO ET AL: "Synthesis and properties of poly(hydroxyurethanes)", JOURNAL OF POLYMER SCIENCE. PART A, POLYMER CHEMISTRY, JOHN WILEY & SONS, INC, US, vol. 31, no. 11, 1 janvier 1993 (1993-01-01), pages 2765-2773, XP002599514, ISSN: 0887-624X**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

L'invention concerne un procédé de synthèse d'un composé poly-hydroxy-uréthane (PHU) glycérilique -notamment d'un composé poly-hydroxy-uréthane glycérilique de masse molaire supérieure à 20 kDa (2 $10^4$ g/mole)-. L'invention concerne aussi un tel composé poly-hydroxy-uréthane glycérilique et une utilisation d'un tel composé poly-hydroxy-uréthane glycérilique.

Un tel procédé de synthèse trouve ses applications dans la fabrication de matériaux polymères poly-hydroxy-uréthanes glycériliques susceptibles d'entrer dans la composition de revêtements de surface -notamment de peintures, de laques-, d'adhésifs, de colles, d'enduits d'étanchéité, de lubrifiants, de mousses rigides -notamment pour les matériaux d'isolation-, de mousses moulées -notamment pour les matériaux de confort et de soutien tels que les matériaux de sellerie pour l'automobile et la literie.

Un tel procédé de synthèse d'un composé poly-hydroxy-uréthane glycérilique et un tel composé poly-hydroxy-uréthane glycérilique trouvent aussi leurs applications comme excipient -notamment comme stabilisateur- dans des compositions à visée cosmétique et/ou thérapeutique.

On connaît des procédés de fabrication de composés polyuréthanes (PU) présentant un groupement uréthane -aussi dénommé carbamatede formule générale (-NH-CO-O-), dans lesquels on utilise un composé comprenant un groupement isocyanate de formule générale (-N=C=O) -notamment du di-isocyanate de toluène (TDI) et du di-isocyanate de diphénylméthane (MDI)-. De tels procédés ne permettent pas la fabrication d'un composé poly-hydroxy-uréthane glycérilique. En outre, les réactifs utilisés pour mettre en oeuvre ces procédés sont d'une part volatils et d'autre part toxiques pour l'homme et pour l'environnement. De tels réactifs nécessitent aussi, pour leur fabrication, l'utilisation de formaldéhyde et de phosgène qui sont aussi des composés volatils et toxiques pour l'homme et pour l'environnement.

Par ailleurs, on connait de N. Kihara (N. Kihara et T. Endo, (1993), Journal of Polymer Science, 31, 2765-2776) un procédé de synthèse d'un composé poly-hydroxy-uréthane dans lequel on fait réagir un bis(glycidyl cyclo-carbonate) éther du bisphénol-A avec le 1,6-diaminohexane dans le DMSO à 100°C pendant 24 heures. Un tel procédé est limité à l'utilisation d'un dérivé du bisphénol-A et à l'obtention d'un composé poly-hydroxy-uréthane formé d'une chaîne principale linéaire de faible poids moléculaire et résultant de la polycondensation d'une diamine unique et d'un bis(glycidyl cyclo-carbonate) éther de bisphénol-A unique.

L'invention vise donc à proposer un procédé de synthèse adapté pour permettre l'obtention d'un composé de haute masse molaire, en particulier d'un composé de haute masse molaire qui est réticulé.

Le document Webster (Webster D.C. et Crain A.L., (2000), Progress in Organic Coatings, 40, 275-282) décrit un procédé de fabrication d'un polymère fonctionnel présentant des groupements cyclo-carbonates pour la fabrication d'un revêtement thermodurcissable. Dans un tel procédé, on réalise une copolymérisation par voie de radicaux libres de monomères de carbonate d'éthylène vinylique (VEC) avec, le cas échéant, du néodécanoate de vinyle ou du néononanoate de vinyle dans le mono-méthyle-éther du propylène glycol puis une attaque des groupements cyclo-carbonates par une amine. Un tel procédé est limité dans ses applications à la fabrication d'un polymère fonctionnel poly-carbonaté et à la réaction subséquente d'une amine avec ledit polymère fonctionnel poly-carbonaté.

L'invention vise à pallier les inconvénients précédemment évoqués.

L'invention vise donc à proposer un procédé de synthèse d'un composé poly-hydroxy-uréthane glycérilique dans lequel on n'utilise pas de composés isocyanates. L'invention s'inscrit donc dans le cadre du développement de nouveaux matériaux polymériques ne nécessitant pas l'utilisation de réactifs toxiques pour l'homme et pour l'environnement.

L'invention vise aussi à proposer un procédé de synthèse d'un composé poly-hydroxy-uréthane glycérilique permettant de contrôler la masse molaire du composé poly-hydroxy-uréthane glycérilique ainsi que son degré de réticulation.

L'invention vise donc un procédé de synthèse d'un composé poly-hydroxy-uréthane glycérilique qui soit simple dans sa mise en oeuvre, qui ne nécessite pas d'étape complexe de purification d'intermédiaires de synthèse et/ou du composé poly-hydroxy-uréthane glycérilique obtenu et qui est adapté pour pouvoir être réalisé par de simples additions simultanées ou successives des réactifs dans un réacteur unique.

L'invention vise un procédé de synthèse d'un composé poly-hydroxy-uréthane glycérilique dans lequel il est possible de maîtriser la structure dudit composé poly-hydroxy-uréthane glycérilique en adaptant l'ordre d'addition des réactifs de départ et de maîtriser la cinétique des réactions concurrentes.

L'invention vise un tel procédé de synthèse d'un composé poly-hydroxy-uréthane glycérilique qui est réalisé avec une sélectivité et un rendement élevés.

L'invention vise un tel procédé de synthèse d'un composé poly-hydroxy-uréthane glycérilique à pression atmosphérique et qui ne nécessite pas l'utilisation d'un dispositif de maintien du milieu réactionnel sous une pression inférieure ou supérieure à la pression ambiante.

L'invention vise donc un tel procédé de synthèse d'un composé poly-hydroxy-uréthane glycérilique adapté pour pouvoir valoriser du glycérol issu de ressources renouvelables.

L'invention vise donc un tel procédé de synthèse d'un composé poly-hydroxy-uréthane glycérilique dans lequel on utilise des réactifs précurseurs issus de ressources renouvelables.

L'invention vise en particulier à proposer un tel procédé de synthèse d'un composé poly-hydroxy-uréthane glycérilique permettant de valoriser les ressources renouvelables, notamment le glycérol qui est un coproduit de la transformation des huiles et des graisses animales ou végétales.

L'invention vise aussi un composé poly-hydroxy-uréthane glycérilique susceptible d'être obtenu par un procédé selon l'invention. Les composés poly-hydroxy-uréthanes présentent, de façon générale, un groupement hydroxyle porté par le carbone en position β par rapport au carbonyle du groupement uréthane. Un tel groupement hydroxyle est connu pour pouvoir former une liaison du type liaison hydrogène avec le groupement carbonyle et pour augmenter la résistance du groupement hydroxy-uréthane vis-à-vis de l'hydrolyse.

En particulier, l'invention vise un composé poly-hydroxy-uréthane glycérilique présentant à la fois une résistance à l'hydrolyse améliorée et une haute masse molaire, notamment supérieur à 2 $10^4$ g/mole.

L'invention vise donc un composé poly-hydroxy-uréthane glycérilique présentant, dans les solvants polaires et les solvants apolaires, un pouvoir rhéologique compatible avec une utilisation comme additif dans des compositions adhésives, des peintures, des lubrifiants, etc.

L'invention vise aussi un tel composé poly-hydroxy-uréthane glycérilique présentant une compatibilité en solution avec les solvants polaires -notamment les solvants polaires aprotiques et les solvants polaires protiques- et avec les solvants apolaires.

L'invention vise à proposer un composé poly-hydroxy-uréthane glycérilique, en particulier un composé poly-hydroxy-uréthane glycérilique de haute masse molaire, présentant des groupements fonctionnels polaires -notamment des groupements uréthanes, hydroxyles, amines et esters- et des groupes hydrophobes -en particulier des groupements aliphatiques-adaptés pour conférer audit composé des propriétés amphiphiles modulables dans les solvants apolaires et dans les solvants polaires.

Pour ce faire, l'invention concerne un procédé de synthèse d'un composé poly-hydroxy-uréthane (PHU) glycérilique -notamment d'un composé PHU glycérilique de masse molaire élevée, en particulier de masse molaire supérieure à 2 $10^4$ g/mole-,
caractérisé en ce qu'on met en contact :

- une quantité d'au moins un ester acrylique de cyclo-carbonate glycérilique -dit EACCG par abréviation-, et :
- une quantité d'un premier composé organique aminé comprenant au moins un groupement aminé choisi dans le groupe formé d'un groupement amine primaire ($-NH_2$) et d'un groupement amine secondaire (-NH-) :

dans des conditions adaptées pour pouvoir former un composé, dit composé poly-cyclo-carbonate glycérilique, présentant au moins deux groupements cyclo-carbonates glycériliques, par addition du au moins un groupement aminé du premier composé organique aminé sur une double liaison éthylénique de l'ester acrylique de cyclo-carbonate glycérilique, puis on réalise une étape de polymérisation dans laquelle on fait réagir ledit composé poly-cyclo-carbonate glycérilique avec une quantité d'au moins un deuxième composé organique aminé comprenant au moins deux groupements aminés choisis dans le groupe formé d'un groupement amine primaire ($-NH_2$) et d'un groupement amine secondaire (-NH-) de façon à former le composé poly-hydroxy-uréthane glycérilique.

Dans tout le texte ci-dessus ou ci-après, on désigne :

- par « composé organique » ou « groupement organique », un composé ou un groupement hydrocarboné comprenant éventuellement au moins un atome d'oxygène et/ou au moins un atome de phosphore :
- par groupement « glycérilique » un groupement dérivé de la molécule de glycérol et présentant au moins un groupe de trois atomes de carbone linéairement liés les uns aux autres, chaque atome de carbone du groupe de trois atomes de carbone présentant une liaison avec un atome d'oxygène. On entend par groupement « mono-glycérilique » un groupement comprenant un groupe unique de trois atomes de carbone linéairement liés les uns aux autres, chaque atome de carbone du groupe de trois atomes de carbone présentant une liaison avec un atome d'oxygène. On entend par groupement « poly-glycérilique » un groupement comprenant une pluralité de groupes de trois atomes de carbone linéairement liés les uns aux autres, chaque atome de carbone de chaque groupe de trois atomes de carbone présentant une liaison avec un atome d'oxygène :
- par « composé poly-hydroxy-uréthane glycérilique », un composé comprenant au moins deux groupements d'atomes choisis dans le groupe formé :

    - d'un groupement d'atomes de formule générale (A) suivante :

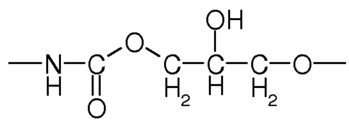

(A),

◦ d'un groupement d'atomes de formule générale (B) suivante :

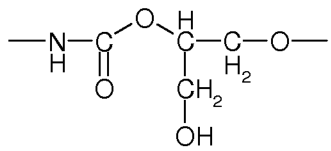

(B),

et

◦ d'un groupement d'atomes de formule générale (C) suivante :

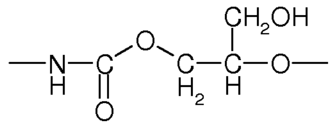

(C).

Dans un procédé selon l'invention, on forme, par une réaction d'addition d'un premier composé organique aminé sur la double liaison éthylénique de l'acrylate de l'ester acrylique de cyclo-carbonate glycérilique du type « Aza-Michaël », un intermédiaire de synthèse polyfonctionnel, dit composé poly-cyclo-carbonate glycérilique, adapté pour pouvoir subir une réticulation subséquente avec un deuxième composé organique aminé apte à provoquer une ouverture du cycle cyclo-carbonate glycérilique à 5 chainons ou à 6 chainons par la réaction d'aminolyse du groupement cyclo-carbonate glycérilique du composé poly-cyclo-carbonate glycérilique et la formation d'un groupement hydroxy-uréthane glycérilique. De cette façon, on maitrise le degré de réticulation du composé poly-hydroxy-uréthane glycérilique obtenu ainsi que ses propriétés physico-chimiques.

Dans un procédé selon l'invention, on choisit et on utilise un ester acrylique de cyclo-carbonate glycérilique présentant deux sites fonctionnels réactifs présentant des réactivités distinctes vis-à-vis des amines -et le cas échéant vis-à-vis des alcools- et on forme un composé poly-hydroxy-uréthane glycérilique sans aucune étape de purification d'un intermédiaire de synthèse, notamment du composé poly-cyclo-carbonate glycérilique.

Les inventeurs ont observé de façon totalement surprenante et non décrite dans l'état de la technique que la mise en contact d'un ester acrylique de cyclo-carbonate glycérilique et d'une amine -notamment une amine secondaire-conduit à la formation préférentielle du produit d'addition de ladite amine sur la double liaison éthylénique conjuguée avec le carbonyle de l'ester acrylique de cyclo-carbonate glycérilique et non pas, comme décrit dans l'état de la technique, à l'ouverture du cycle cyclo-carbonate glycérilique de l'ester acrylique de cyclo-carbonate glycérylique par l'amine ou par addition de ladite amine sur le carbonyle de l'ester acrylique de cyclo-carbonate glycérilique.

Les inventeurs ont en fait observé que l'addition d'un premier composé organique aminé comprenant une amine primaire ($R-NH_2$ dans laquelle R est un groupement d'atomes formé de carbone, d'hydrogène, d'oxygène et éventuellement d'azote) conduit dans une première étape à une addition de ladite amine primaire sur la liaison éthylénique d'une première molécule d'ester acrylique de cyclo-carbonate glycérilique en formant une amine secondaire du premier composé organique aminé, et que l'addition de l'amine secondaire formée sur la liaison éthylénique d'une deuxième molécule d'ester acrylique de cyclo-carbonate glycérilique conduit à la formation d'une amine tertiaire substituée par deux groupements cyclo-carbonates glycériliques.

Il est donc possible d'obtenir un composé polyfonctionnel porteur d'une pluralité de groupements cyclo-carbonates réactifs vis-à-vis d'un deuxième composé organique aminé.

Une telle sélectivité non connue de l'état de la technique permet donc de réaliser l'addition d'un premier composé organique aminé comprenant au moins un groupement aminé choisi dans le groupe formé d'un groupement amine primaire ($-NH_2$) et d'un groupement amine secondaire (-NH-) sur la double liaison (C=C) éthylénique du groupement acrylate sans nécessiter aucune étape préalable de protection sélective du groupement cyclo-carbonate de l'ester acrylique de cyclo-carbonate glycérilique et de libération sélective ultérieure du groupement cyclo-carbonate protégé. Une telle sélectivité permet en fait de réaliser l'addition d'un premier composé organique aminé sensiblement -notamment exclusivement- sur la double liaison (C=C) éthylénique du groupement acrylate.

Dans un procédé selon l'invention, on réalise d'abord une mise en contact d'une quantité d'au moins un ester acrylique de cyclo-carbonate glycérilique, et une quantité d'un premier composé organique aminé comprenant au moins un groupement d'atomes choisis dans le groupe formé des amines primaires (-$NH_2$) et des amines secondaires (-NH-) de façon à permettre une réaction d'addition (dite réaction « Aza-Michaël ») du premier composé organique aminé sur la double liaison éthylénique, puis on ajoute le deuxième composé organique aminé de façon à former le composé poly-hydroxy-uréthane glycérilique en formant les groupements hydroxy-uréthanes par ouverture du cycle cyclo-carbonate à 5 chainons ou à 6 chainons par la réaction d'aminolyse du groupement cyclo-carbonate glycérilique.

Dans un tel procédé, on forme donc, par une attaque nucléophile d'un premier composé organique aminé sur la double liaison éthylénique de l'ester acrylique de cyclo-carbonate glycérilique (réaction « Aza-Michaël »), un composé intermédiaire, dit composé poly-cyclo-carbonate glycérilique, comprenant une pluralité de groupes réactifs cyclo-carbonates glycériliques. En particulier, un tel composé poly-cyclo-carbonate glycérilique peut présenter autant de groupes cyclo-carbonates que le premier composé organique aminé présente de sites nucléophiles, c'est à dire deux sites nucléophiles par groupement amine primaire (-$NH_2$) et un site nucléophile par groupement amine secondaire (-NH-).

Ainsi, on augmente non seulement le nombre de groupements réactifs du composé poly-cyclo-carbonate glycérilique mais aussi la polarité dudit composé poly-cyclo-carbonate glycérilique et sa réactivité.

On prépare l'ester acrylique de cyclo-carbonate glycérilique à cinq chainons (4-acryloyloxyméthyl-1,3-dioxolan-2-one ou 4-[prop-2-en-1-yloxy)méthyl]-1,3-dioxolan-2-one) et/ou l'ester acrylique de cyclo-carbonate glycérilique à six chainons (5-acryloyloxy-1,3-dioxolan-2-one ou 4-[(2-méthyl-prop-2-en-1-yloxy)]-1,3-dioxolan-2-one) et/ou l'ester méthacrylique de cyclo-carbonate glycérilique à cinq chainons (4-methacryloyloxyméthyl-1,3-dioxolan-2-one), et/ou l'ester méthacrylique de cyclo-carbonate glycérilique à six chainons (5-methacryloyloxy-1,3-dioxolan-2-one) par un procédé connu en lui-même de l'homme du métier.

Par exemple, on réalise l'acylation du composé cyclo-carbonate glycérilique par traitement du composé cyclo-carbonate glycérilique par le chlorure d'acryloyle. On réalise cette acylation du composé cyclo-carbonate glycérilique à cinq chainons (4-hydroxyméthyl-1,3-dioxolan-2-one) ou à six chainons (5 hydroxy-1,3-dioxolan-2-one) par le chlorure d'acryloyle dans le dichlorométhane à une température comprise entre 0°C et 25°C en présence de triéthylamine avec un rendement de l'ordre de 70%. De façon similaire, on réalise une telle acylation d'un composé cyclo-carbonate glycérilique par le chlorure de méthacryloyle.

Il est aussi possible de réaliser une estérification du composé cyclo-carbonate glycérilique par l'acide acrylique catalysée par un acide (par exemple par un acide de Lewis, par un acide de Bronsted), ou par une base (par exemple par une résine anionique, par une amine aromatique -notamment la 4-(diméthylamino)-pyridine (DMAP)-.

Il est aussi possible de réaliser une trans-estérification de l'acrylate de méthyle ou du méthacrylate de méthyle par le composé cyclo-carbonate glycérilique.

Pour permettre la mise en oeuvre d'un procédé selon l'invention, on choisit ou on forme préalablement un composé cyclo-carbonate glycérilique à cinq chainons (4-hydroxyméthyl-1,3-dioxolan-2-one) de formule (D) ci-après :

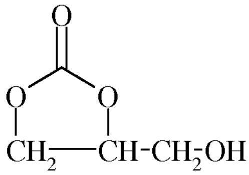

(D),

ou un composé cyclo-carbonate glycérilique à six chainons (5-hydroxy-1,3-dioxolan-2-one) de formule (E) ci-après :

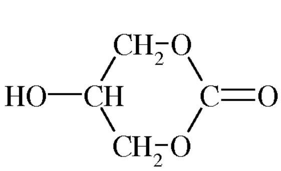

(E),

par tout procédé connu en lui-même de l'homme du métier.

Par exemple, pour permettre la mise en oeuvre d'un procédé selon l'invention, il est possible de former le cyclo-carbonate glycérilique par un traitement de carbonylation catalytique du glycérol par de l'urée à une température comprise entre 90°C et 220°C en présence d'un catalyseur solide comme décrit dans FR 2 778 182. On utilise par exemple du glycérol issu des activités de l'industrie oléochimique visant à transformer les huiles -notamment les huiles végétales- et les graisses en acides gras, en savons et alcools gras présentant des propriétés tensioactives et en esters méthyliques

ou éthyliques pour les biocarburants.

On prépare un tel composé cyclo-carbonate glycérilique selon un procédé décrit dans le document FR 2 733 232, par trans-estérification -aussi nommée trans-carbonatation- catalytique du glycérol à partir d'un carbonate organique cyclique, en particulier à partir de carbonate d'éthylène ou de propylène. Un tel procédé permet la valorisation de glycérol d'origine végétale.

Pour permettre la mise en oeuvre d'un procédé selon l'invention, il est possible de former le cyclo-carbonate glycérilique par réaction de trans-estérification d'un triglycéride -notamment d'une huile naturelle d'origine végétale- avec du diméthyle carbonate en présence de méthylate de sodium à une température supérieure à 100°C et pression supérieure à la pression atmosphérique.

Dans un procédé selon l'invention, on obtient une densification des groupements uréthane, hydroxyle, ester et amine par deux réactions successives -la première réaction étant du type réaction « Aza-Michaël » et la deuxième réaction étant une réaction d'aminolyse d'un cyclo-carbonate- sans utiliser un tiers corps d'amorçage de la réticulation tel qu'employé dans les réactions de polymérisation radicalaire.

Avantageusement et selon l'invention, chaque ester acrylique de cyclo-carbonate glycérilique est de formule générale (F) suivante :

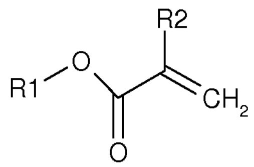

(F),

dans lequel :

- R1 est choisi dans le groupe formé :
  - du radical cyclo-carbonate glycérilique à cinq chainons de formule générale (G) suivante ;

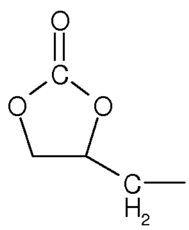

(G),

  - du radical cyclo-carbonate glycérilique à six chainons de formule générale (H) suivante ;

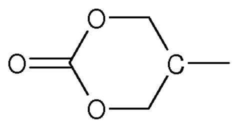

(H),

et;

  - des radicaux cyclo-carbonates poly-glycériliques à cinq chainons ou à six chainons, -notamment des radicaux $\alpha,\alpha$-diglycérols cyclo-carbonates à cinq chainons ou à six chainons, des radicaux $\alpha,\beta$-diglycérols cyclo-carbonates à cinq chainons ou à six chainons et des radicaux $\beta,\beta$-diglycérols cyclo-carbonates à cinq chainons ou à six chainons- ;

- R2 est choisi dans le groupe formé d'un hydrogène et d'un groupe méthyle.

On choisit l'ester acrylique de cyclo-carbonate glycérilique dans le groupe formé des esters acryliques de cyclo-carbonates glycériliques à cinq chainons, des esters acryliques de cyclo-carbonates glycériliques à six chainons, des esters méthacryliques de cyclo-carbonates glycériliques à cinq chainons, des esters méthacryliques de cyclo-carbonates glycériliques à six chainons et des esters acryliques ou méthacryliques de cyclo-carbonate(s) poly-glycériliques présentant au moins deux groupements glycérol liés entre eux par au moins une liaison éther.

L'ester acrylique de cyclo-carbonate glycérilique peut être un ester acrylique de cyclo-carbonate α,α-diglycérilique à cinq chainons de formule générale (P1) suivante :

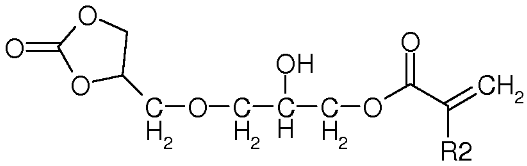

, (P1)

dans lequel R2 est choisi dans le groupe formé d'un hydrogène et d'un groupe méthyle.

L'ester acrylique de cyclo-carbonate glycérilique peut être un ester acrylique de cyclo-carbonate α,α-diglycérilique à cinq chainons de formule générale (P2) suivante :

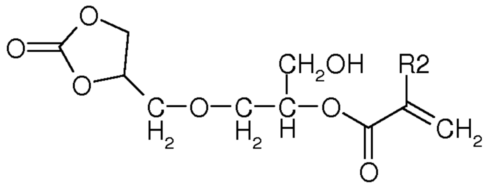

, (P2)

dans lequel R2 est choisi dans le groupe formé d'un hydrogène et d'un groupe méthyle.

L'ester acrylique de cyclo-carbonate glycérilique peut être un ester acrylique de cyclo-carbonate α,α-diglycérilique à cinq chainons de formule générale (P3) suivante :

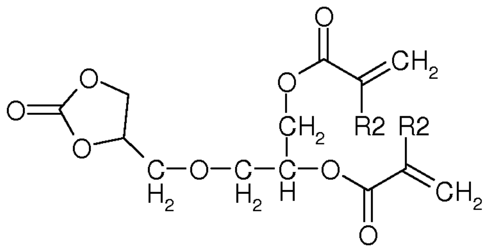

, (P3)

dans lequel chacun des groupes R2 est choisi indépendamment l'un de l'autre dans le groupe formé d'un hydrogène et d'un groupe méthyle.

L'ester acrylique de cyclo-carbonate glycérilique peut être un ester acrylique de cyclo-carbonate α,β-diglycérilique à six chainons de formule générale (Q1) suivante :

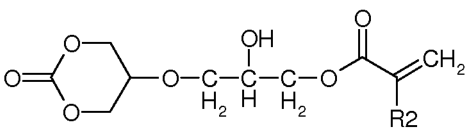

, (Q1)

dans lequel R2 est choisi dans le groupe formé d'un hydrogène et d'un groupe méthyle.

L'ester acrylique de cyclo-carbonate glycérilique peut être un ester acrylique de cyclo-carbonate α,β-diglycérilique à six chainons de formule générale (Q2) suivante :

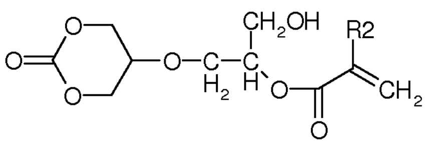

, (Q2)

dans lequel R2 est choisi dans le groupe formé d'un hydrogène et d'un groupe méthyle.

L'ester acrylique de cyclo-carbonate glycérilique peut être un ester acrylique de cyclo-carbonate α,β-diglycérilique à six chainons de formule générale (Q3) suivante :

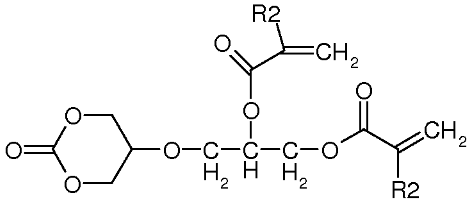

, (Q3)

dans lequel chacun des groupes R2 est choisi indépendamment l'un de l'autre dans le groupe formé d'un hydrogène et d'un groupe méthyle.

L'ester acrylique de cyclo-carbonate glycérilique peut être un ester acrylique de cyclo-carbonate β,β-diglycérilique à six chainons de formule générale (S1) suivante :

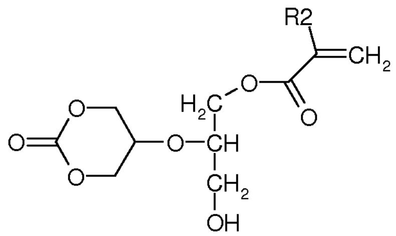

, (S1)

dans lequel R2 est choisi dans le groupe formé d'un hydrogène et d'un groupe méthyle.

L'ester acrylique de cyclo-carbonate glycérilique peut être un ester acrylique de cyclo-carbonate β,β-diglycérilique à six chainons de formule générale (S2) suivante :

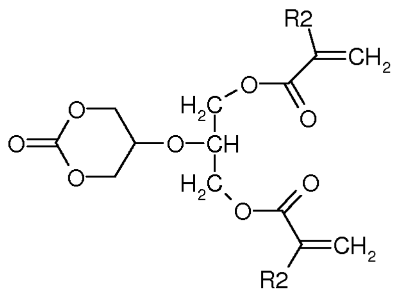

, (S2)

dans lequel chacun des groupes R2 est choisi indépendamment l'un de l'autre dans le groupe formé d'un hydrogène et d'un groupe méthyle.

De tels groupements poly-glycériliques sont adaptés pour pouvoir introduire des groupements espaceurs glycériliques porteurs de la fonction acrylique sur un hydroxyle primaire, sur un hydroxyle secondaire, ou sur les hydroxyles primaire(s) et secondaire(s).

Avantageusement et selon l'invention, le premier composé organique aminé est un composé amino-hydrocarboné. Un tel composé amino-hydrocarboné est constitué exclusivement d'atomes de carbone, d'atomes d'hydrogène et d'atomes d'azote. Il peut s'agir d'une amine aliphatique -notamment d'une monoamine primaire aliphatique-, d'une amine aromatique, d'une polyalkylène-amine.

Avantageusement, on choisit le premier composé organique aminé dans le groupe formé :

- des monoamines primaires et des monoamines secondaires, notamment des monoamines primaires ou des monoamines secondaires à chaîne linéaire, à chaîne ramifiée, à chaîne cyclique, à chaîne saturée ou instaurée et comportant de 1 à 20 atomes de carbone, notamment la butylamine, l'hexylamine et la cyclohexylamine ;
- des monoamines primaires et des monoamines secondaires, notamment des monoamines primaires ou des monoamines secondaires à chaîne linéaire, à chaîne ramifiée, à chaîne cyclique, à chaîne saturée ou instaurée et

comportant de 1 à 20 atomes de carbone, notamment la butylamine, l'hexylamine et la cyclohexylamine et comportant :

- ◦ au moins un groupement ionique notamment choisi dans le groupe formé d'un carboxylate, d'un carbonate, d'un sulfonate, d'un phosphate, d'un phosphonate, d'un ammonium quaternaire, et/ou ;
- ◦ au moins une fonction choisie dans le groupe formé d'un hydroxyle (-OH), d'un thiol (-SH) et d'un éther ;

- des polyéthermonoamines -notamment les amines à chaîne polymérique du type oxyde d'alkylène (par exemple un oxyde d'éthylène, unoxyde de propylène, un oxyde de butylène, un oxyde de tétraméthylène) pouvant comporter au moins un groupement ionique -notamment choisi dans le groupe formé d'un carboxylate, d'un carbonate, d'un sulfonate, d'un phosphate, d'un phosphonate, d'un ammonium quaternaire- et/ou au moins une fonction choisie dans le groupe formé d'un hydroxyle (-OH), d'un thiol (-SH) et d'un éther.

Avantageusement, dans une première variante d'un procédé selon l'invention, le premier composé organique aminé est un composé organique hydrocarboné mono-aminé de formule générale R3-$NH_2$ dans laquelle R3 est un groupement hydrocarboné aliphatique comprenant de 1 à 22 atomes de carbone -notamment un groupement n-butyle (-$(CH_2)_3$-$CH_3$)-.

Dans cette première variante d'un procédé selon l'invention, on forme :

- un composé poly-cyclo-carbonate glycérilique de formule (J) suivante :

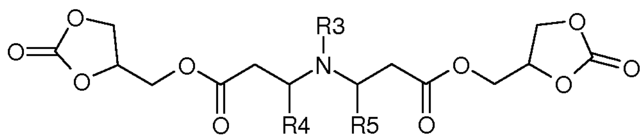

(J),

et/ou

- un composé poly-cyclo-carbonate glycérilique de formule (K) suivante :

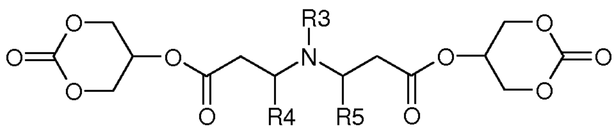

(K),

et/ou

- un composé poly-cyclo-carbonate de formule (L) suivante :

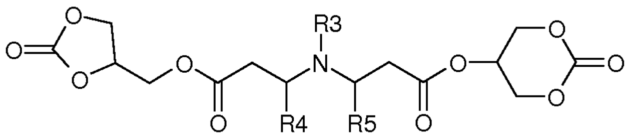

(L),

dans lesquels

- ▪ R3 est un groupement hydrocarboné aliphatique comprenant de 1 à 22 atomes de carbone -notamment un groupement n-butyle (-$(CH_2)_3$-$CH_3$)-,
- ▪ R4 et R5 sont choisis indépendamment l'un de l'autre dans le groupe formé d'un H et d'un méthyle (-$CH_3$).

Avantageusement, dans un procédé selon l'invention, on forme d'abord un composé poly-cyclo-carbonate glycérilique présentant au moins deux motifs chimiques de formule (M) suivante :

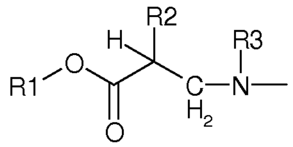

(M)

dans lequel :

- ◦ R1 est choisi dans le groupe formé :
  - ▪ du radical cyclo-carbonate glycérilique à cinq chainons de formule générale (G) suivante ;

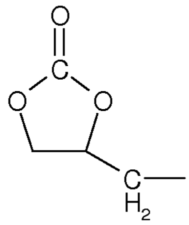

(G),

  - ▪ du radical cyclo-carbonate glycérilique à six chainons de formule générale (H) suivante ;

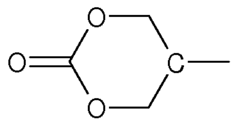

(H),

  et ;
  - ▪ des radicaux cyclo-carbonates poly-glycériliques à cinq chainons ou à six chainons -notamment des radicaux α,α-diglycérols cyclo-carbonates à cinq chainons ou à six chainons, des radicaux α,β-diglycérols cyclo-carbonates à cinq chainons ou à six chainons et des radicaux β,β-diglycérols cyclo-carbonates à cinq chainons ou à six chainons-;

- ◦ R2 est choisi dans le groupe formé d'un hydrogène et d'un groupe méthyle
- ◦ R3 est un groupement hydrocarboné aliphatique comprenant de 1 à 22 atomes de carbone -notamment un groupement n-butyle ($-(CH_2)_3-CH_3$)-.

Avantageusement, on choisit le premier composé organique aminé dans le groupe formé des amines aliphatiques.

Avantageusement et selon l'invention, on choisit le premier composé organique aminé dans le groupe formé :

- du 1,2-diaminoéthane de formule $NH_2-(CH_2)_2-NH_2$,
- du 1,4-diaminobutane de formule $NH_2-(CH_2)_4-NH_2$,
- du 1,6-diaminohexane de formule $NH_2-(CH_2)_6-NH_2$,
- du 1,8-diaminooctane de formule $NH_2-(CH_2)_8-NH_2$,
- du 1,12-diaminododecane de formule $NH_2-(CH_2)_{12}-NH_2$,
- du 1,16-diaminohexadecane de formule $NH_2-(CH_2)_{16}-NH_2$,
- de la N,N' diéthyl-éthylènediamine de formule $C_2H_5-NH-(CH_2)_2-NH-C_2H_5$,
- de la diéthylènetriamine de formule $(NH_2-[CH_2]_2-NH-[CH_2]_2-NH_2)$,
- de la triéthylène tétramine de formule $NH_2-(CH_2)_2-NH-(CH_2)_2-NH-(CH_2)_2-NH_2$,
- de la pentaéthylènehexamine de formule $(NH_2-[CH_2]_2-NH-[CH_2]_2-NH-[CH_2]_2-NH-[CH_2]_2-NH-[CH_2]_2-NH_2)$ et,
- de la tris(2-aminoéthyl)amine de formule $N[(CH_2)_2-NH_2]_3$.

Avantageusement, on choisit le premier composé organique aminé dans le groupe formé des amines aromatiques. Avantageusement, on choisit le premier composé organique aminé dans le groupe formé de la benzylamine (Ar-

$CH_2$-$NH_2$), de la 1,2-benzendiamine ($NH_2$-Ar-$NH_2$), de la 1,3-benzendiamine ($NH_2$-Ar-$NH_2$), de la 1,4-benzendiamine ($NH_2$-Ar-$NH_2$), de la 1,2-benzendimethanamine ($NH_2$-$CH_2$-Ar-$CH_2$-$NH_2$), de la 1,3-benzendimethanamine ($NH_2$-$CH_2$-Ar-$CH_2$-$NH_2$), de la 1,4-benzendimethanamine ($NH_2$-$CH_2$-Ar-$CH_2$-$NH_2$), de la 2-aminobenzylamine ($NH_2$-Ar-$CH_2$-$NH_2$), de la N-benzylethylenediamine (Ar-$CH_2$-NH-$(CH_2)_2$-$NH_2$), de la biphényldiamine ($NH_2$-Ar-Ar-$NH_2$) et de la 4,4'-oxydianiline ($NH_2$-Ar-O-Ar-$NH_2$) dans lesquels le groupement Ar est un groupement phényle.

Avantageusement, on choisit le premier composé organique aminé dans le groupe formé des amino-alcools, des amino-alcool éthers, des amino-acides, des amino-esters et des amino-phosphates.

Avantageusement, on choisit le deuxième composé organique aminé dans le groupe formé :

- des diamines aliphatiques et de diamines cycloaliphatiques -notamment la bis(aminopropyl) pipérazine (commercialisée par Hunstman), les diamines aliphatiques ou cycloaliphatiques connues en tant que précurseurs de di-isocyanates telles que l'hexaméthylène diamine (HMDA), l'isophorone diamine (IPDA), le bis-(4,4'-aminocyclohexyl)méthane ($Hi_2MDA$), la tricyclodécane diamine (ou 3(4),8(9)-bis-(aminométhyl)tricyclo[5.2.1.10]décane commercialisée par Celanese), la 2 méthylpentane-1 ,5-diamine ;
- des diamines aromatiques, connues généralement en tant que précurseurs de di-isocyanates, par exemple la toluène diamine ;
- les diamines à fonction(s) ionique(s), telles que par exemple la lysine et ses sels, notamment ses sels alcalins, en particulier de sodium, ou d'ammonium quaternaire ;
- des oligomères et des polymères comprenant au moins deux fonctions aminées, le squelette du polymère pouvant être indifféremment un polyamide, un polyéther, un polyester, un polyuréthane ou des copolymères de ceux-ci.

Avantageusement, on choisit le deuxième composé organique aminé dans le groupe formé des amines aliphatiques.

Avantageusement et selon l'invention, le deuxième composé organique aminé est un composé amino-hydrocarboné. Un tel composé amino-hydrocarboné est constitué exclusivement d'atomes de carbone, d'atomes d'hydrogène et d'atomes d'azote.

Avantageusement, on choisit le deuxième composé organique aminé dans le groupe formé des amino-alcools, des amino-alcool éthers, des amino-acides, des amino-esters et des amino-phosphates.

Avantageusement, on choisit le deuxième composé organique aminé dans le groupe formé des amines aromatiques. Avantageusement, on choisit le premier composé organique aminé dans le groupe formé de la benzylamine (Ar-$CH_2$-$NH_2$), de la 1,2-benzendiamine ($NH_2$-Ar-$NH_2$), de la 1,3-benzendiamine ($NH_2$-Ar-$NH_2$), de la 1,4-benzendiamine ($NH_2$-Ar-$NH_2$), de la 1,2-benzendimethanamine ($NH_2$-$CH_2$-Ar-$CH_2$-$NH_2$), de la 1,3-benzendimethanamine ($NH_2$-$CH_2$-Ar-$CH_2$-$NH_2$), de la 1,4-benzendimethanamine ($NH_2$-$CH_2$-Ar-$CH_2$-$NH_2$), de la 2-aminobenzylamine ($NH_2$-Ar-$CH_2$-$NH_2$), de la N-benzylethylenediamine (Ar-$CH_2$-NH-$(CH_2)_2$-$NH_2$), de la biphényldiamine ($NH_2$-Ar-Ar-$NH_2$) et de la 4,4'-oxydianiline ($NH_2$-Ar-O-Ar-$NH_2$) dans lesquels le groupement Ar est un groupement phényle.

Avantageusement et selon l'invention, on met en contact la quantité du(des) ester(s) acrylique(s) de cyclo-carbonate(s) glycérilique(s) et la quantité de premier composé organique aminé à une température comprise entre la température ambiante -notamment 20°C, préférentiellement 30°C- et 120°C de façon à former le composé poly-cyclo-carbonate glycérilique. Avantageusement, on forme le composé poly-cyclo-carbonate glycérilique à température ambiante, c'est-à-dire sans utiliser de moyen spécifique de chauffage et/ou de refroidissement du mélange de réaction. Avantageusement, on met en contact la quantité du(des) ester(s) acrylique(s) de cyclo-carbonate(s) glycérilique(s) et la quantité de premier composé organique aminé à une température comprise entre la température ambiante et 90°C.

Avantageusement, le procédé de synthèse du composé poly-hydroxy-uréthane selon l'invention est un procédé de synthèse monotope (dite aussi « synthèse en une seule étape », ou synthèse « one pot » en anglais).

Avantageusement en variante et selon l'invention, on réalise successivement l'addition de la quantité du premier composé organique aminé puis l'addition de la quantité du deuxième composé organique aminé dans un même réacteur de synthèse. Il est possible de réaliser l'addition de la quantité du premier composé organique aminé puis l'addition de la quantité du deuxième composé organique aminé en ménageant un délai entre les deux étapes d'addition. Mais il est aussi possible de réaliser l'addition de la quantité du premier composé organique aminé puis l'addition de la quantité du deuxième composé organique aminé immédiatement après la fin de l'étape d'addition de la quantité du premier composé organique aminé.

Avantageusement en variante et selon l'invention, on réalise l'addition de la quantité du premier composé organique aminé et l'addition de la quantité du deuxième composé organique aminé simultanément dans un même réacteur de synthèse.

Avantageusement et en variante selon l'invention, on réalise la synthèse du composé poly-hydroxy-uréthane glycérilique sans addition volontaire d'un composé solvant autre que l'ester acrylique de cyclo-carbonate glycérilique, le premier composé organique aminé et le deuxième composé organique aminé.

Avantageusement et selon une variante de l'invention, on prépare une solution de l'ester acrylique de cyclo-carbonate glycérilique dans un milieu solvant choisi dans le groupe formé des dialkyle-carbonates et de leurs mélanges. On ajoute ensuite dans la solution de l'ester acrylique de cyclo-carbonate glycérilique dans un milieu solvant le premier composé organique aminé, puis le deuxième composé organique aminé.

Dans une telle variante d'un procédé selon l'invention, le dialkyle carbonate permet la régénération de groupements cyclo-carbonates -notamment de groupement cyclo-carbonates glycériliques- à partir de groupements hydroxyles libres de l'ester acrylique de cyclo-carbonate glycérilique ou du composé poly-hydroxy-uréthane glycérilique formé.

Avantageusement et selon l'invention, on réalise la synthèse du poly-hydroxy-uréthane glycérylique en l'absence de système catalytique.

Avantageusement et selon l'invention, on réalise la synthèse du composé poly-hydroxy-uréthane glycérilique sous agitation mécanique dans un réacteur adapté pour pouvoir permettre l'introduction de la quantité d'ester acrylique de cyclo-carbonate glycérilique, de la quantité du premier composé organique aminé, de la quantité du deuxième composé organique aminé et, le cas échéant le composé solvant, et pour pouvoir permettre un soutirage d'une suspension du composé poly-hydroxy-uréthane glycérilique formé dans un milieu liquide contenant le premier composé organique aminé, le deuxième composé organique aminé, et une séparation dudit composé poly-hydroxy-uréthane glycérilique et du milieu liquide et un recyclage dudit milieu liquide dans le réacteur.

Avantageusement et selon l'invention, on réalise la synthèse du composé poly-cyclo-carbonate à une température prédéterminée inférieure à chacune des températures d'ébullition de l'ester acrylique de cyclo-carbonate glycérilique, du premier composé organique aminé et du deuxième composé organique aminé. De cette façon, on limite la décomposition spontanée de l'ester acrylique de cyclo-carbonate glycérilique et sa disparition spontanée avant l'addition du deuxième composé organique aminé.

L'invention concerne aussi un nouveau composé poly-hydroxy-uréthane glycérilique présentant au moins un groupement choisi dans le groupe formé de :

- un groupement de structure générale (N) suivante :

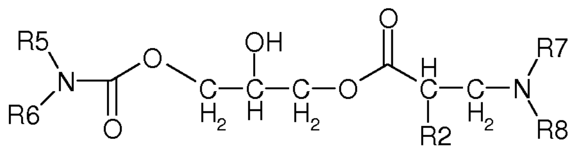

, (N)

comprenant un hydroxyle secondaire, et

- un groupement de structure générale (M) suivante :

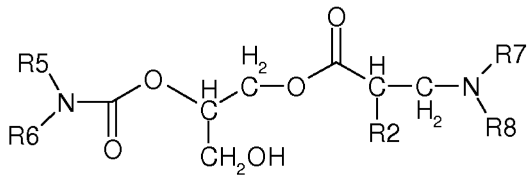

, (M)

comprenant un hydroxyle primaire,

- un groupement de structure générale (O) suivante :

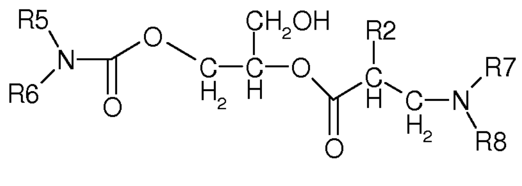

, (O)

comprenant un hydroxyle primaire,

et dans lesquels,

- R2 est choisi dans le groupe formé d'un hydrogène et d'un groupement méthyle, et
- R5, R6, R7 et R8 sont choisis indépendamment les uns des autres dans le groupe formé d'un hydrogène et d'un substituant organique formé de carbone, d'hydrogène, d'oxygène et d'azote.

Les groupements hydroxyles primaires et les groupements hydroxyles secondaires du composé-poly-hydroxy-uréthane glycérilique selon l'invention sont responsables de liaisons hydrogène qui améliorent les propriétés chimiques et mécaniques des composés obtenus, en particulier leur résistance à l'hydrolyse.

L'invention concerne aussi un tel composé poly-hydroxy-uréthane glycérilique susceptible d'être obtenu par un procédé selon l'invention.

L'invention concerne également un tel composé poly-hydroxy-uréthane glycérilique obtenu par un procédé selon l'invention.

Avantageusement, le composé poly-hydroxy-uréthane glycérilique selon l'invention comprend aussi au moins deux groupements hydroxy-uréthane choisis dans le groupe formé :

◦ d'un groupement d'atomes de formule générale (A) suivante :

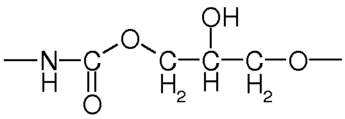
(A),

◦ d'un groupement d'atomes de formule générale (B) suivante :

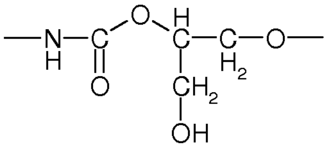
(B),

et

◦ d'un groupement d'atomes de formule générale (C) suivante :

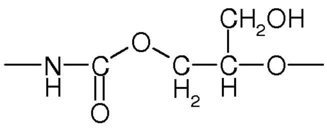
(C).

dans lesquels les fonctions hydroxyles (-OH) libres du groupement hydroxy-uréthane glycérilique de formule générale (B) et (C) sont des fonctions hydroxyles primaires et les fonctions hydroxyles (-OH) libres du groupement hydroxy-uréthane glycérilique de formule générale (A) sont des fonctions hydroxyles secondaires.

Avantageusement et selon l'invention, le composé poly-hydroxy-uréthane glycérilique présente une masse molaire supérieure à 2 $10^4$ g/mole. Avantageusement, le composé poy-hydroxy-uréthane présente une masse molaire supérieure à 5 $10^4$ g/mole, notamment une masse molaire supérieure à 10 $10^4$ g/mole.

Avantageusement et selon l'invention, le composé poly-hydroxy-uréthane glycérilique se présente sous la forme d'un matériau en forme de mousse, en forme de résine rigide ou de granules solides.

L'invention concerne également un procédé de fabrication d'un composé poly-hydroxy-uréthane et un composé poly-hydroxy-uréthane caractérisés en combinaison par tout ou partie des caractéristiques mentionnées ci-dessus ou ci-après.

D'autres buts, caractéristiques et avantages de l'invention apparaîtront à la lecture de la description suivante et notamment des exemples, donnés uniquement à titre d'exemples non limitatifs de modes de réalisation particuliers de l'invention et dans lesquels :

- la figure 1 est une représentation graphique de l'évolution des réactions d'addition de la n-butylamine sur la double liaison éthylénique de l'ester acrylique de cyclo-carbonate glycérilique et sur le groupement cyclo-carbonate de

l'ester acrylique de cyclo-carbonate glycérilique ;

- la figure 2 est une représentation graphique de la cinétique de disparition de la double liaison ($C=CH_2$) de l'ester acrylique de cyclo-carbonate glycérilique par addition de n-butylamine ou de n-octylamine.

EXEMPLE 1 - Réaction d'addition d'une amine primaire (n-butylamine) sur l'ester acrylique de cyclo-carbonate glycérilique.

Dans une pluralité de réacteurs, on place 5 g (2,9 $10^{-2}$ moles) d'ester acrylique de cyclo-carbonate glycérilique (EACCG) que l'on chauffe jusqu'à la température de 50°C sous agitation mécanique. On ajoute ensuite dans chacun des réacteurs une quantité de n-butylamine ($CH_3$-$(CH_2)_3$-$NH_2$) de façon que le rapport stoechiométrique initial entre le groupement amine primaire de la n-butylamine et la double liaison (C=C) de l'EACCG soit compris entre 0 (absence de n-butylamine) et 3,2. Après une heure de réaction, on effectue un prélèvement que l'on analyse par la spectroscopie infra-rouge à transformée de Fourrier (IRTF). On relève sur le spectre IR, pour chaque prélèvement correspondant à une quantité ($Q_n$-butylamine) de n-butylamine, le pourcentage de transmission correspondant à :

- la bande de vibration du groupement carbonyle (C=O) du groupement cyclo-carbonate de l'EACCG à la fréquence de 1800 $cm^{-1}$ et le pourcentage de transmission ($\%T_{1800\ cm-1}$) correspondant ;
- la bande de vibration du groupement alcène ($C=CH_2$) de l'EACCG à 1640 $cm^{-1}$ et le pourcentage de transmission ($\%T_{1640\ cm-1}$) correspondant, et ;
- la bande de vibration du groupement carbonyle (C=O) de l'ester acrylique de l'EACCG à 1730 $cm^{-1}$ et le pourcentage de transmission ($\%T_{1730\ cm-1}$) correspondant.

On calcule, à partir des valeurs mesurées sur chacun des spectres infra-rouge obtenus pour chacune des quantités de n-butylamine ajoutées, le rapport du pourcentage de transmission à 1640 $cm^{-1}$ du groupement alcène et du pourcentage de transmission à 1730 $cm^{-1}$ du groupement ester acrylique de l'EACCG et on divise ce rapport par la valeur de ce même rapport mesuré en absence de n-butylamine. On obtient une valeur de rapport normalisé ($RN_{(C=C)}$) comprise entre 0 et 100% et traduisant la disparition de la double liaison éthylénique de l'EACCG.

On calcule aussi, à partir des valeurs mesurées sur chacun des spectres infra-rouge obtenus pour chacune des quantités de n-butylamine ajoutées, le rapport du pourcentage de transmission à 1800 $cm^{-1}$ du groupement carbonyle (C=O) du cyclo-carbonate et du pourcentage de transmission à 1730 $cm^{-1}$ du groupement ester acrylique de l'EACCG et on divise ce rapport par la valeur de ce même rapport mesuré en absence de n-butylamine. On obtient une valeur de rapport normalisé ($RN_{(Cyclo\text{-}carbonate)}$) comprise entre 0 et 100% et traduisant la disparition du groupement cyclo-carbonate.

Les résultats sont représentés en figure 1. De façon totalement surprenante, les inventeurs ont observé que le rapport normalisé $RN_{(C=C)}$ (●) passe d'une valeur de 100% en absence de n-butylamine à une valeur sensiblement nulle pour une quantité stoechiométrique de n-butylamine par rapport à l'EACCG.

En parallèle, le rapport normalisé ($RN_{(Cyclo\text{-}carbonate)}$) (○) reste à une valeur élevée et supérieure à 90% jusqu'à une valeur de n-butylamine ajoutée correspondant à une quantité stoechiométrique de n-butylamine par rapport à l'EACCG.

De cette façon, les inventeurs ont mis en évidence que le traitement de l'EACCG par une quantité stoechiométrique de n-butylamine permet à une addition sélective de la n-butylamine sur le groupement éthylénique de l'ester acrylique de cyclo-carbonate glycérilique.

Pour des valeurs du rapport molaire d'EACCG / n-butylamine croissantes et supérieures à 1, la valeur $RN_{(Cyclo\text{-}carbonate)}$ décroit et la fonction carbonyle du cyclo-carbonate glycérilique de l'EACCG disparait. Cette disparition est sensiblement complète pour des valeurs du rapport molaire d'EACCG / n-butylamine supérieures à 2,8.

EXEMPLE 2 - Réaction d'addition du type « Aza-Michaël » d'une mono-amine primaire (n-butylamine [$CH_3$-$(CH_2)_3$-$NH_2$] ou n-octylamine [$CH_3$-$(CH_2)_7$-$NH_2$)] sur la double liaison ($C=CH_2$) de l'ester acrylique de cyclo-carbonate glycérilique.

Dans un réacteur en verre, on forme un milieu réactionnel comprenant 5 g (2,9 $10^{-2}$ mole) d'ester acrylique de cyclo-carbonate glycérilique (EACCG) une quantité équimoléculaire de mono-amine (n-butylamine ou n-octylamine). On porte et on maintient le milieu réactionnel à la température de 50°C sous agitation mécanique (400 rpm) pendant une durée de 4 heures. On réalise la réaction d'addition (« Aza-Michaël ») de la mono-amine sur la liaison éthylénique de l'EACCG sans addition volontaire d'un solvant et à la pression atmosphérique.

On réalise un suivi de la réaction par spectroscopie par RMN du proton à 300 MHz dans $CDCl_3$. On calcule un taux ($T_{ACG}$) de conversion du groupement alcène ($C=CH_2$) de l'EACCG en fonction du temps de réaction selon la formule suivante :

$$T_{ACG} = (I_1/2)/(I_1/2 + I_2/3)*100,$$

dans laquelle :

- $I_1$ est la valeur de l'intégrale des signaux des deux protons éthyléniques ($C=CH_2$) de l'EACCG entre 5,9 et 6,5 ppm, et
- $I_2$ est la valeur de l'intégrale des signaux des trois protons du méthyle terminal de l'amine.

L'évolution du taux ($T_{ACG}$) de conversion du groupement alcène ($C=CH_2$) de l'EACCG en fonction du temps de réaction est représentée en figure 2. La réaction d'addition de la n-butylamine (♦) et de la n-octylamine (□) sur le groupement alcène ($C=CH_2$) de l'EACCG est complète au bout de 30 minutes.

EXEMPLE 3 - Réaction d'addition du type « Aza-Michaël » d'une amine primaire (n-butylamine [$CH_3$-$(CH_2)_3$-$NH_2$]) sur l'ester acrylique de cyclo-carbonate glycérilique (EACCG) - Effet de la température.

Dans un réacteur en verre, on forme un milieu réactionnel comprenant un équivalent molaire de n-butylamine et deux équivalents molaires d'EACCG que l'on porte à la température de 50°C sous agitation mécanique (300 rpm (rotation par minutes)) pendant une durée de 4 heures. On réalise la réaction d'addition (« Aza-Michaël ») de la n-butylamine sur la liaison éthylénique de l'EACCG sans addition volontaire d'un solvant. On observe par analyse en IRTF un signal résiduel à 1640cm$^{-1}$ caractéristique de la double liaison ($C=CH_2$) de l'EACCG. Le taux de conversion ($T_{ACG}$) de la double liaison ($C=CH_2$) de l'EACCG est de 54% après 4 heures de réaction.

L'analyse du milieu réactionnel par spectrométrie de masse montre la présence d'un ion moléculaire à m/z 417. La formule (X) de ce composé est donnée ci-après :

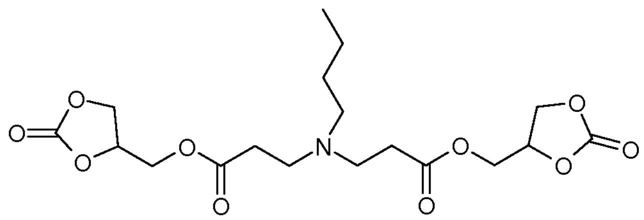

(X)

A titre de comparaison, on réalise la même réaction aux températures de 70°C et 110°C. Les valeurs du taux de conversion de la double liaison ($C=CH_2$) de l'EACCG en excès par rapport à la n-butylamine sont données au tableau 1 ci-après :

Tableau 1

| n-butylamine, équivalent | ACG, équivalent | Température, °C | $T_{ACG}$, % |
|---|---|---|---|
| 1 | 2 | 50 | 54 |
| 1 | 2 | 70 | 62 |
| 1 | 2 | 110 | 93 |

Aux températures de 70°C et 110°C, 1 mole de n-butylamine permet la transformation de 1,9 moles de double liaison ($C=CH_2$) de l'EACCG. L'analyse par IRTF du milieu réactionnel obtenu à 110°C démontre la disparition du signal à 1640cm$^{-1}$ traduisant la disparition de la double liaison ($C=CH_2$) de l'EACCG. En outre, cette même analyse par IRTF montre la disparition de la bande de déformation NH à 3400 cm$^{-1}$ caractéristique des amines secondaires et sa transformation en amine tertiaire.

L'exemple 3 démontre l'attaque de l'amine primaire de la n-butylamine sur une première double liaison ($C=CH_2$) d'une première molécule d'EACCG et la formation d'une amine secondaire, et l'attaque subséquente de ladite amine secondaire formée sur une deuxième double liaison ($C=CH_2$) d'une deuxième molécule d'EACCG. Il en résulte un composé poly-cyclo-carbonate glycérilique polyfonctionnel présentant au moins deux groupements cyclo-carbonates glycériliques.

EXEMPLE 4 - Influence du diméthyle carbonate (DMC) à titre de solvant sur la réaction d'addition du type « Aza-Michael ».

On réalise une synthèse telle que décrite à l'exemple 3 sous pression atmosphérique et à une température de

70°C dans 20 mL de DMC. Le rapport molaire de l'EACCG (5g, 2,9 $10^{-2}$ mole) sur la (n-butylamine ($CH_3$-$(CH_2)_3$-$NH_2$)) est de 2. La disparition de la double liaison ($C=CH_2$) de l'EACCG est totale au bout de 2 heures, alors que cette disparition n'était que de 62% à 70°C en l'absence de DMC. Le DMC constitue donc un solvant de choix apte à stimuler l'addition de la n-butylamine sur la double liaison ($C=CH_2$) de l'EACCG. Le DMC est en outre un solvant compatible avec les composés EACCG et avec les intermédiaires poly-cyclo-carbonate glycériliques. Enfin, le DMC est un composé qui est recyclable en regard de sa température d'ébullition (90°C à pression atmosphérique), qui ne présente qu'une faible toxicité vis-à-vis de la souris.

EXEMPLE 5 - Aminolyse du composé poly-cyclo-carbonate glycérilique de formule (X) ci-dessus par la n-butylamine.

On réalise un traitement, dit aminolyse, du composé poly-cyclo-carbonate glycérilique de formule (X) dans lequel on mélange un équivalent du composé de formule (X) et deux équivalents de n-butylamine. On place le mélange obtenu sous agitation mécanique (400 rpm), à pression atmosphérique et à la température de 50°C pendant 3 heures. On réalise la réaction d'aminolyse du poly-cyclo-carbonate glycérilique de formule (X) sans addition de solvant. L'analyse du milieu réactionnel par IRTF montre la disparition du signal du groupement carbonyle (C=O) du cyclo-carbonate à la fréquence de 1800 $cm^{-1}$ et l'apparition d'une bande de transition carbonyle à 1706 $cm^{-1}$ correspondant au carbonyle du motif hydroxy-uréthane.

EXEMPLE 6 - Réaction d'addition d'une amine secondaire (N-méthylbutylamine) sur l'ester acrylique de cyclo-carbonate glycérilique (EACCG).

On réalise un mélange stoechiométrique d'EACCG et de N-méthylbutylamine ($CH_3$-NH-$(CH_2)_3$-$CH_3$] que l'on place sous agitation mécanique (400 rpm) à la température de 50°C et sous pression atmosphérique pendant 1 heure. On réalise la réaction sans addition de solvant. Par analyse en chromatographie en phase gazeuse couplée à la spectrométrie de masse (GC/MS), on observe la formation d'un ion moléculaire de valeur m/z 259 de formule (Y) ci-après :

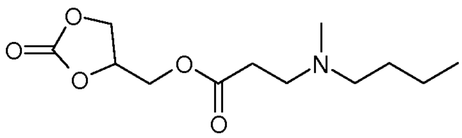

(Y)

et sans ouverture du groupement cyclo-carbonate de l'EACCG. Les inventeurs démontrent ainsi la sélectivité de la réaction d'addition des amines -en particulier des amines secondaires- sur la double liaison ($C=CH_2$) de l'EACCG en regard de l'addition de ces mêmes amines sur le cyclo-carbonate de l'EACCG.

La réaction d'addition du type « Aza-Michaël » sur la double liaison ($C=CH_2$) de l'EACCG est une réaction exothermique rapide même en l'absence de solvant additionnel et à température comprise entre 50°C et 110°C. Cette réaction d'addition du type « Aza-Michaël » est en tout état de cause plus rapide que la réaction, dite réaction d'aminolyse, d'ouverture du cycle cyclo-carbonate par addition de l'amine sur le cycle cyclo-carbonate glycérilique avec formation d'une liaison hydroxy-uréthane glycérilique. En outre, la vitesse de réaction d'une amine secondaire sur le cycle cyclo-carbonate de l'ester acrylique de cyclo-carbonate glycérilique est inférieure à la vitesse de réaction d'une amine primaire sur le cycle cyclo-carbonate du cyclo-carbonate glycérilique. La vitesse de réaction d'une amine secondaire sur le cycle cyclo-carbonate de l'ester acrylique de cyclo-carbonate glycérilique diminue lorsque la longueur de la chaine alkyle de l'amine augmente.

EXEMPLE 7 - Synthèse d'un composé poly-hydroxy-uréthane glycérilique par un procédé en deux étapes selon l'invention.

Dans un réacteur en verre de 100 mL, on place sous agitation mécanique (500 rotations par minutes) 2 équivalents d'EACCG et à une température de 90°C. On ajoute 1 équivalent d'une polyamine choisie dans le groupe formé des amines (EDA, HMDA, DEEDA, TEMA, TAEA) décrites dans le tableau 2 ci-après.

<u>Tableau 2</u>

| Nom | Formule | Abréviation |
|---|---|---|
| Ethylène diamine | $NH_2$-$(CH_2)_2$-$NH_2$ | EDA |
| Hexaméthylène diamine | $NH_2$-$(CH_2)_6$-$NH_2$ | HMDA |
| N,N'-diéthyléthylène diamine | $C_2H_5$-NH-$(CH_2)_2$-NH-$C_2H_5$ | DEEDA |
| Triéthylène tétramine | $NH_2$-$(CH_2)_2$-NH-$(CH_2)_2$-NH-$(CH_2)_2$-$NH_2$ | TEMA |
| Tris(2-aminoéthyl)amine | N[$(CH_2)_2$-$NH_2$]$_3$ | TAEA |

On observe la formation d'un bis-cyclo-carbonate par addition « Aza-Michaël » de chaque fonction amine primaire de la diamine sur la double liaison ($C{=}CH_2$) de l'EACCG. On observe en outre une augmentation de la viscosité du milieu de réaction.

On ajoute ensuite 1 équivalent de la même diamine de façon à former un composé poly-hydroxy-uréthane glycérilique par conversion de l'ordre de 32% des cyclo-carbonates de départ.

EXEMPLE 8 - Synthèse d'un composé poly-hydroxy-uréthane glycérilique par un procédé en une étape selon l'invention.

Dans un réacteur en verre de 50 mL, on place sous agitation mécanique (500 rpm) deux équivalents d'ester acrylique de cyclo-carbonate glycérilique (EACCG) à une température de 90°C. On ajoute 2 équivalents molaires d'une polyamine choisie dans le groupe formé des amines décrites au tableau 2 ci-dessus et sans addition volontaire d'un solvant spécifique. Une telle addition correspond à une addition de 4 équivalents de site nucléophile aminé dans le cas des diamines primaires (EDA, HMDA), 2 équivalents de site nucléophile aminé dans le cas des diamines secondaires (DEEDA), 6 équivalents de site nucléophile aminé dans le cas de la triéthylène tétramine (TEMA) et 6 équivalents de site nucléophile aminé dans le cas de la tris(2-aminoéthyl)amine (TAEA).

Les résultats de ces réactions sont donnés au tableau 3 ci-après dans lequel $M_n$ représente le poids moléculaire en nombre du poly-hydroxy-uréthane (PHU) glycérilique obtenu et déterminé par chromatographie par perméation de gel (GPC), $M_w$ représente le poids moléculaire en masse du PHU glycérilique obtenu et déterminé par GPC, $I_p$ représente l'indice de polymolécularité du PHU glycérilique obtenu et $T_{CCG}$ représente le taux de conversion des cyclo-carbonates glycériliques déterminés par RMN du proton :

Tableau 3

| Amine | Poly-hydroxy-uréthane (PHU) glycérilique | | | | |
|---|---|---|---|---|---|
| | $M_n$, g/mole | $M_w$, g/mole | $I_p$ | Aspect | $T_{CCG}$, % |
| EDA | 35612 | 52484 | 1,43 | Mousse | 69 |
| HMDA | 23363 | 28746 | 1,23 | Résine rigide | 75 |
| DEEDA | - | - | - | - | 0 |
| TEMA | 32808 | 44006 | 1,34 | Résine rigide | 79 |
| TAEA | 42228 | 53452 | 1,26 | Granules solides | 83 |

Dans le cas de l'addition de la N,N'-diéthyléthylène diamine (DEEDA) ne présentant pas de groupement amine primaire, on observe que celle-ci réagit avec la double liaison ($C{=}CH_2$) de l'EACCG, mais que les groupements amine secondaire restants ou tertiaire formés ne réagissent pas avec les groupements cyclo-carbonates de l'EACCG.

EXEMPLE 9 - Synthèse d'un composé poly-hydroxy-uréthane glycérilique par un procédé en une étape selon l'invention - effet de la température.

On réalise la réaction d'addition de l'hexaméthylène diamine (HMDA) et d'ester acrylique de cyclo-carbonate glycérilique (EACCG) pendant une durée de 3 heures en l'absence de tout composé solvant autre que les réactifs de départ comme décrit à l'exemple 8. On forme un composé poly-hydroxy-uréthane glycérilique selon l'invention dont les caractéristiques sont données au tableau 4 ci-après.

Tableau 4.

| T, °C | $M_n$, g/mole | $M_w$, g/mole | $I_p$ | $T_{CCG}$, % |
|---|---|---|---|---|
| 60 | 8542 | 10236 | 1,11 | 40 |
| 90 | 23363 | 28746 | 1,23 | 75 |
| 120 | 25470 | 30232 | 1,18 | 82 |

EXEMPLE 10 - Synthèse d'un composé poly-hydroxy-uréthane glycérilique par un procédé en une étape selon l'invention - effet du solvant.

On réalise la réaction d'addition de 20 g (0,116 mole) d'EACCG et une quantité équimoléculaire d'hexaméthylènediamine (HMDA ; 0,116 mole) à la température de 90°C dans 30 mL de DMC. On forme un composé poly-hydroxy-uréthane glycérilique selon l'invention dont les caractéristiques sont données au tableau 5 ci-après :

Tableau 5.

| Amine | Solvant | $M_n$, g/mole | $M_w$, g/mole | $I_p$ | Aspect visuel | $T_{CCG}$, % |
|---|---|---|---|---|---|---|
| HMDA | - | 23363 | 28746 | 1,23 | Résine rigide | 75 |
| TEMA | - | 32808 | 44006 | 1,34 | Résine rigide | 79 |
| HMDA | DMC | 27312 | 31455 | 1,18 | Résine rigide | 95 |
| TEMA | DMC | 42808 | 54005 | 1,26 | Elastique | 96 |

EXEMPLE 11 - Synthèse d'un composé poly-hydroxy-uréthane glycérilique selon l'invention - effet du rapport initial EACCG/amine.

On réalise l'addition d'une diamine et d'EACCG à la température de 90°C dans 30 mL de diméthyle carbonate à titre de composé solvant. Dans chacune des conditions opératoires, on forme un composé poly-hydroxy-uréthane glycérilique selon l'invention dont les caractéristiques sont données au tableau 6 ci-après dans lequel :

- la colonne « Etape » précise si l'addition de l'amine est réalisée en 1 étape ou en 2 étapes successives ;
- la colonne « Ratio » précise le rapport entre le nombre de moles d'ester acrylique de cyclo-carbonate glycérilique initial le nombre de mole de groupement aminé initial ;
- $M_n$ représente la masse molaire en nombre du PHU glycérilique obtenu et déterminé par chromatographie par perméation de gel (GPC) ;
- $M_w$ représente la masse molaire du PHU glycérilique obtenu et déterminé par GPC ;
- $I_p$ représente l'indice de polymolécularité du PHU glycérilique obtenu et ;
- $T_{EACCG}$ représente le taux de conversion de la double liaison de l'EACCG déterminé par RMN du proton ;
- $T_{CCG}$ représente le taux de conversion des cyclo-carbonates glycérilique déterminés par RMN du proton :

Tableau 6 (n.d. signifie non déterminé).

| Amine | Ratio | Etape | Solvant | $M_n$, g/mole | $M_w$, g/mole | $I_p$ | Aspect visuel | $T_{EAC\,CG}$, % | $T_{CCG}$, % |
|---|---|---|---|---|---|---|---|---|---|
| HMDA | 1/2 | 1 | - | 23363 | 28746 | 1,23 | Résine rigide | 100 | 75 |
| HMDA | 1/3 | 1 | - | 25200 | 29003 | 1,15 | Résine rigide | 100 | 79 |
| HMDA | 2/1 | 1 | DMC | 5696 | 7025 | 1,18 | Gel rigide | 80 | 20 |
| HMDA | 4/(1+2) | 2 | DMC | n.d. | n.d. | n.d. | Résine élastique | 100 | 90 |
| TAEA | 6/(1+2) | 2 | DMC | n.d. | n.d. | n.d. | Résine élastique | 100 | 92 |

## Revendications

**1.** Procédé de synthèse d'un composé poly-hydroxy-uréthane glycérilique **caractérisé en ce qu'**on met en contact :

- une quantité d'au moins un ester acrylique de cyclo-carbonate glycérilique, et :
- une quantité d'un premier composé organique aminé comprenant au moins un groupement aminé choisi dans le groupe formé d'un groupement amine primaire ($-NH_2$) et d'un groupement amine secondaire (-NH-) :

dans des conditions adaptées pour pouvoir former un composé, dit composé poly-cyclo-carbonate glycérilique, présentant au moins deux groupements cyclo-carbonates glycériliques, par addition du au moins un groupement aminé du premier composé organique aminé sur une double liaison éthylénique de l'ester acrylique de cyclo-carbonate glycérilique,

puis on réalise une étape de polymérisation dans laquelle on fait réagir ledit composé poly-cyclo-carbonate glycérilique avec une quantité d'au moins un deuxième composé organique aminé comprenant au moins deux groupements aminés choisis dans le groupe formé d'un groupement amine primaire ($-NH_2$) et d'un groupement amine secondaire (-NH-) de façon à former le composé poly-hydroxy-uréthane glycérilique.

**2.** Procédé selon la revendication 1, **caractérisé en ce que** chaque ester acrylique de cyclo-carbonate glycérilique est de formule générale (F) suivante :

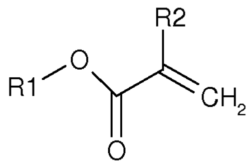

(F),

dans lequel :

◦ R1 est choisi dans le groupe formé :

- du radical cyclo-carbonate glycérilique à cinq chainons de formule générale (G) suivante ;

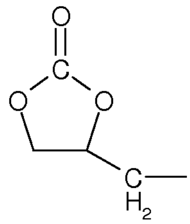

(G),

- du radical cyclo-carbonate glycérilique à six chainons de formule générale (H) suivante ;

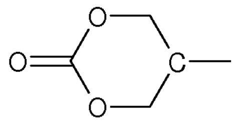

(H),

et;

- des radicaux cyclo-carbonates poly-glycériliques à cinq chainons ou à six chainons ;

◦ R2 est choisi dans le groupe formé d'un hydrogène et d'un groupe méthyle.

3. Procédé selon l'une des revendications 1 ou 2, **caractérisé en ce que** le premier composé organique aminé est un composé amino-hydrocarboné.

4. Procédé selon l'une des revendications 1 à 3, **caractérisé en ce que** le deuxième composé organique aminé est un composé amino-hydrocarboné.

5. Procédé selon l'une des revendications 1 à 4, **caractérisé en ce qu'**on met en contact la quantité du(des) ester(s) acrylique(s) de cyclo-carbonate(s) glycérilique(s) et la quantité de premier composé organique aminé à une température comprise entre la température ambiante et 120°C de façon à former le composé poly-cyclo-carbonate glycérilique.

6. Procédé selon l'une des revendications 1 à 5, **caractérisé en ce que** le premier composé organique aminé est choisi dans le groupe formé :

- du 1,2-diaminoéthane de formule $NH_2$-$(CH_2)_2$-$NH_2$,
- du 1,4-diaminobutane de formule $NH_2$-$(CH_2)_4$-$NH_2$,
- du 1,6-diaminohexane de formule $NH_2$-$(CH_2)_6$-$NH_2$,
- du 1,8-diaminooctane de formule $NH_2$-$(CH_2)_8$-$NH_2$,
- du 1,12-diaminododecane de formule $NH_2$-$(CH_2)_{12}$-$NH_2$,
- du 1,16-diaminohexadecane de formule $NH_2$-$(CH_2)_{16}$-$NH_2$,
- de la N,N' diéthyl-éthylènediamine de formule $C_2H_5$-NH-$(CH_2)_2$-NH-$C_2H_5$,
- de la diéthylènetriamine de formule ($NH_2$-$[CH_2]_2$-NH-$[CH_2]_2$-$NH_2$),

- de la triéthylène tétramine de formule $NH_2-(CH_2)_2-NH-(CH_2)_2-NH-(CH_2)_2-NH_2$,
- de la pentaéthylènehexamine de formule $(NH_2-[CH_2]_2-NH-[CH_2]_2-NH-[CH_2]_2-NH-[CH_2]_2-NH-[CH_2]_2-NH_2)$ et,
- de la tris(2-aminoéthyl)amine de formule $N[(CH_2)_2-NH_2]_3$.

7. Procédé selon l'une des revendications 1 à 6, **caractérisé en ce qu'**on forme d'abord un composé poly-cyclo-carbonate glycérilique présentant au moins deux motifs chimiques de formule (M) suivante :

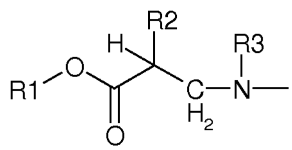

(M)

dans lequel :

◦ R1 est choisi dans le groupe formé :

▪ du radical cyclo-carbonate glycérilique à cinq chainons de formule générale (G) suivante ;

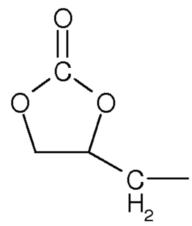

(G),

▪ du radical cyclo-carbonate glycérilique à six chainons de formule générale (H) suivante ;

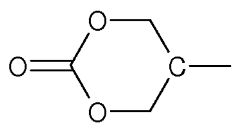

(H),

et ;

▪ des radicaux cyclo-carbonates poly-glycériliques à cinq chainons ou à six chainons ;

◦ R2 est choisi dans le groupe formé d'un hydrogène et d'un groupe méthyle, et :

◦ R3 est un groupement hydrocarboné aliphatique comprenant de 1 à 22 atomes de carbone.

8. Procédé selon l'une des revendications 1 à 7, **caractérisé en ce qu'**on réalise successivement l'addition de la quantité du premier composé organique aminé puis l'addition de la quantité du deuxième composé organique aminé dans un même réacteur de synthèse.

9. Procédé selon l'une des revendications 1 à 7, **caractérisé en ce qu'**on réalise l'addition de la quantité du premier composé organique aminé et l'addition de la quantité du deuxième composé organique aminé simultanément dans un même réacteur de synthèse.

10. Procédé selon l'une des revendications 1 à 9, **caractérisé en ce qu'**on prépare une solution de l'ester acrylique de cyclo-carbonate glycérilique dans un milieu solvant choisi dans le groupe formé des dialkyle-carbonates et de leurs mélanges.

11. Procédé selon l'une des revendications 1 à 10, **caractérisé en ce qu'**on réalise la synthèse du poly-hydroxy-uréthane glycérylique en l'absence de système catalytique.

**12.** Procédé selon l'une des revendications 1 à 11, **caractérisé en ce qu'**on réalise la synthèse du composé poly-hydroxy-uréthane glycérilique sous agitation mécanique dans un réacteur adapté pour pouvoir permettre l'introduction de la quantité d'ester acrylique de cyclo-carbonate glycérilique, de la quantité du premier composé organique aminé, de la quantité du deuxième composé organique aminé et, le cas échéant le composé solvant, et pour pouvoir permettre un soutirage d'une suspension du composé poly-hydroxy-uréthane glycérilique formé dans un milieu liquide contenant le premier composé organique aminé, le deuxième composé organique aminé, et une séparation dudit composé poly-hydroxy-uréthane glycérilique et du milieu liquide et un recyclage dudit milieu liquide dans le réacteur.

**13.** Procédé selon l'une des revendications 1 à 12, **caractérisé en ce qu'**on réalise la synthèse du composé poly-cyclo-carbonate à une température prédéterminée inférieure à chacune des températures d'ébullition de l'ester acrylique de cyclo-carbonate glycérilique, du premier composé organique aminé et du deuxième composé organique aminé.

**14.** Composé poly-hydroxy-uréthane glycérilique présentant au moins un groupement choisi dans le groupe formé :

◦ d'un groupement de structure générale (N) suivante :

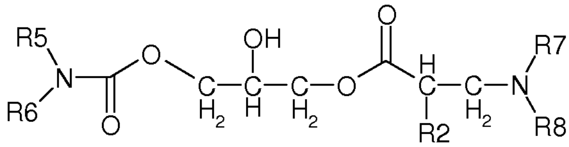

, (N)

comprenant un hydroxyle secondaire, et

◦ d'un groupement de structure générale (M) suivante :

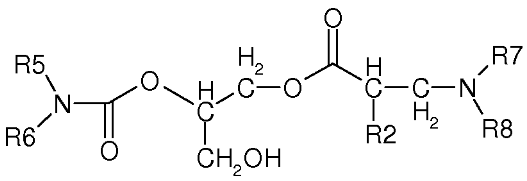

, (M)

comprenant un hydroxyle primaire,

◦ un groupement de structure générale (O) suivante :

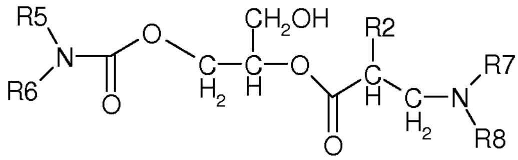

, (O)

comprenant un hydroxyle primaire,

et dans lesquels,

- R2 est choisi dans le groupe formé d'un hydrogène et d'un groupement méthyle, et
- R5, R6, R7 et R8 sont choisis indépendamment les uns des autres dans le groupe formé d'un hydrogène et d'un substituant organique formé de carbone, d'hydrogène, d'oxygène et d'azote.

**15.** Composé selon la revendication 14 **caractérisé en ce qu'**il présente une masse molaire supérieure à 2 $10^4$ g/mole.

**Patentansprüche**

1. Verfahren zur Synthese einer glycerinbasierten Polyhydroxyurethan-Verbindung **dadurch gekennzeichnet, dass** Folgendes miteinander in Kontakt gebracht wird:

    - eine Menge von mindestens einem glycerinbasierten Cyclocarbonat-Acrylester, und
    - eine Menge von einer ersten organischen Aminoverbindung, umfassend mindestens eine Aminogruppe, ausgewählt aus der Gruppe, gebildet aus einer primären Aminogruppe ($-NH_2$) und einer sekundären Aminogruppe (-NH-),

    unter angepassten Bedingungen, um eine Verbindung, genannt glycerinbasierte Polycyclocarbonat-Verbindung, die mindestens zwei glycerinbasierte Cyclocarbonat-Gruppen aufweist, durch Zugabe der mindestens einen Aminogruppe der ersten organische Aminoverbindung auf einer doppelten Ethylenbindung des glycerinbasierten Cyclocarbonat-Acrylesters bilden zu können,
    dann erfolgt ein Schritt der Polymerisierung, in dem die glycerinbasierte Polycyclocarbonat-Verbindung mit einer Menge von mindestens einer zweiten organischen Aminoverbindung zur Reaktion gebracht wird, die mindestens zwei Aminogruppen umfasst, ausgewählt aus der Gruppe, gebildet aus einer primären Aminogruppe ($-NH_2$) und einer sekundären Aminogruppe (-NH-), um die Polyhydroxyurethan-Verbindung zu bilden.

2. Verfahren nach Anspruch 1, **dadurch gekennzeichnet, dass** jeder glycerinbasierte Cyclocarbonat-Acrylester die Folgende allgemeine Formel (F) aufweist:

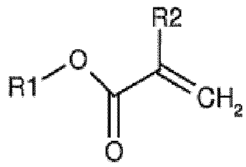
(F),

wobei:

- R1 ausgewählt ist aus der Gruppe, gebildet aus:
- dem glycerinbasierten Cyclocarbonat-Radikal mit fünf Ketten mit der folgenden allgemeinen Formel (G);

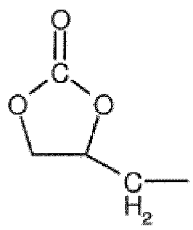
(G),

- dem glycerinbasierten Cyclocarbonat-Radikal mit sechs Ketten mit der folgenden allgemeinen Formel (H);

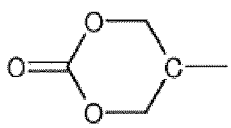
(H),

und;

- poly-glycerinbasierten Cyclocarbonat-Radikalen mit fünf Ketten oder mit sechs Ketten;
- R2 ausgewählt ist aus der Gruppe, gebildet aus einem Wasserstoff und einer Methylgruppe.

3. Verfahren nach einem der Ansprüche 1 oder 2, **dadurch gekennzeichnet, dass** die erste organische Aminoverbindung eine Aminokohlenwasserstoff-Verbindung ist.

**4.** Verfahren nach einem der Ansprüche 1 bis 3, **dadurch gekennzeichnet, dass** die zweite organische Aminoverbindung eine Aminokohlenwasserstoff-Verbindung ist.

**5.** Verfahren nach einem der Ansprüche 1 bis 4, **dadurch gekennzeichnet, dass** die Menge des (der) glycerinbasierten Cyclocarbonat-Acrylester(s) und die Menge der ersten organischen Aminoverbindung bei einer Temperatur miteinander in Kontakt gebracht werden, die zwischen der Raumtemperatur und 120 °C liegt, um die glycerinbasierte Polycyclocarbonat-Verbindung zu bilden.

**6.** Verfahren nach einem der Ansprüche 1 bis 5, **dadurch gekennzeichnet, dass**, die erste organische Aminoverbindung ausgewählt ist aus der Gruppe, gebildet aus:

- 1,2-Diaminoethan mit der Formel $NH_2-(CH_2)_2-NH_2$,
- 1,4-Diaminobutan mit der Formel $NH_2-(CH_2)_4-NH_2$,
- 1,6-Diaminohexan mit der Formel $NH_2-(CH_2)_6-NH_2$,
- 1,8-Diaminooctan mit der Formel $NH_2-(CH_2)_8-NH_2$,
- 1,12-Diaminododecan mit der Formel $NH_2-(CH_2)_{12}-NH_2$,
- 1,16-Diaminohexadecan mit der Formel $NH_2-(CH_2)_{16}-NH_2$,
- N,N'diethyl-ethylendiamin mit der Formel $C_2H_5-NH-(CH_2)_2-NH-C_2H_5$,
- Diethylentriamin mit der Formel $(NH_2-[CH_2]_2-NH-[CH_2]_2-NH_2)$,
- Triethylentetramin mit der Formel $NH_2-(CH_2)_2-NH-(CH_2)_2-NH-(CH_2)_2-NH_2$,
- Pentaethylenhexamin mit der Formel $(NH_2-[CH_2]_2-NH-[CH_2]_2-NH-[CH_2]_2-NH-[CH_2]_2-NH-[CH_2]_2-NH)_2$ und,
- Tris(2-aminoethyl)amin mit der Formel $N[(CH_2)_2-NH_2]_3$.

**7.** Verfahren nach einem der Ansprüche 1 bis 6, **dadurch gekennzeichnet, dass** zunächst eine glycerinbasierte Polycyclocarbonat-Verbindung gebildet wird, die mindestens zwei chemische Motive mit der folgenden Formel (M) aufweist:

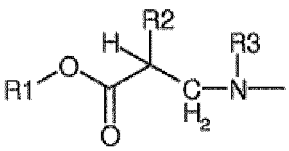
(M)

wobei:

- R1 ausgewählt ist aus der Gruppe, gebildet aus:
- dem glycerinbasierten Cyclocarbonat-Radikal mit fünf Ketten mit der folgenden allgemeinen Formel (G);

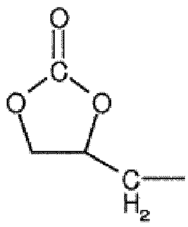
(G),

- dem glycerinbasierten Cyclocarbonat-Radikal mit sechs Ketten mit der folgenden allgemeinen Formel (H);

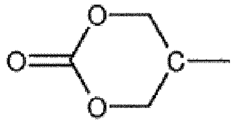
(H),

und ;

- poly-glycerinbasierten Cyclocarbonat-Radikalen mit fünf Ketten oder mit sechs Ketten;
- R2 ausgewählt ist aus der Gruppe, gebildet aus einem Wasserstoff und einer Methylgruppe, und
- R3 eine aliphatische Kohlenwasserstoffgruppe ist, die von 1 bis 22 Kohlenstoffatome umfasst.

**8.** Verfahren nach einem der Ansprüche 1 bis 7, **dadurch gekennzeichnet, dass** aufeinander folgend die Zugabe der Menge der ersten organischen Aminoverbindung erfolgt, dann die Zugabe der Menge der zweiten organischen Aminoverbindung in einem gleichen Synthesereaktor erfolgt.

**9.** Verfahren nach einem der Ansprüche 1 bis 7, **dadurch gekennzeichnet, dass** die Zugabe der Menge der ersten organischen Aminoverbindung und die Zugabe der Menge der zweiten organischen Aminoverbindung gleichzeitig in einen gleichen Synthesereaktor erfolgen.

**10.** Verfahren nach einem der Ansprüche 1 bis 9, **dadurch gekennzeichnet, dass** eine Lösung des glycerinbasierten Cyclocarbonat-Acrylesters in einem Medium hergestellt wird, ausgewählt aus der Gruppe, gebildet aus Dialkyl-Kohlenstoffen und ihren Mischungen.

**11.** Verfahren nach einem der Ansprüche 1 bis 10, **dadurch gekennzeichnet, dass** die Synthese des glycerinbasierten Polyhydroxyurethans in Abwesenheit eines Katalysatorsystems erfolgt.

**12.** Verfahren nach einem der Ansprüche 1 bis 11, **dadurch gekennzeichnet, dass** die Synthese der glycerinbasierten Polyhydroxyurethan-Verbindung unter mechanischem Rühren in einem Reaktor erfolgt, der ausgelegt ist, um die Einführung der Menge von glycerinbasierten Cyclocarbonat-Acrylester, der Menge der ersten organischen Aminoverbindung, der Menge der zweiten organischen Aminoverbindung und, gegebenenfalls, der Lösemittelverbindung zu ermöglichen, und um eine Entnahme einer Suspension des glycerinbasierten Polyhydroxyurethans ermöglichen zu können, gebildet in einem flüssigen Medium mit der ersten organischen Aminoverbindung, der zweiten organischen Aminoverbindung und einer Trennung des glycerinbasierten Polyhydroxyurethans und des flüssigen Mediums und einem Recycling des flüssigen Mediums im Reaktor.

**13.** Verfahren nach einem der Ansprüche 1 bis 12, **dadurch gekennzeichnet, dass** die Synthese der Polycyclocarbonat-Verbindung bei einer vorbestimmten Temperatur erfolgt, die niedriger als jede der Siedetemperaturen des glycerinbasierten Cyclocarbonat-Acrylesters, der ersten organischen Aminoverbindung und der zweiten organischen Aminoverbindung ist.

**14.** Glycerinbasierte Polyhydroxyurethan-Verbindung, umfassend mindestens eine Gruppe, ausgewählt aus der Gruppe, gebildet aus:

- einer Gruppe mit der folgenden allgemeinen Struktur (N):

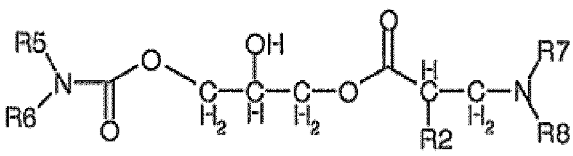

,

wobei (N) ein sekundäres Hydroxyl umfasst, und
- einer Gruppe mit der folgenden allgemeinen Struktur (M):

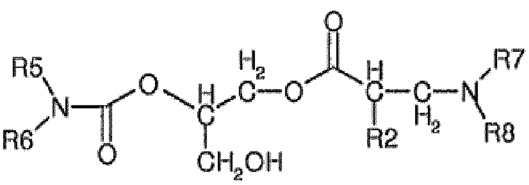

,

wobei (M) ein primäres Hydroxyl umfasst,
- einer Gruppe mit der folgenden allgemeinen Struktur (O):

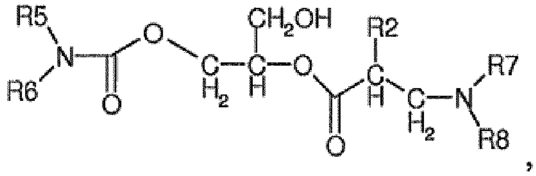

wobei (0) ein primäres Hydroxyl umfasst,

und wobei

- R2 aus der Gruppe ausgewählt ist, die aus einem Wasserstoff und einer Methylgruppe gebildet, und
- R5, R6, R7 und R8 unabhängig voneinander aus der Gruppe ausgewählt sind, gebildet aus einem Wasserstoff und einem organischen Substituenten, gebildet aus Kohlenstoff, Wasserstoff, Sauerstoff und Stickstoff.

**15.** Verbindung nach Anspruch 14, **dadurch gekennzeichnet, dass** sie eine Molmasse von mehr als 2 $10^4$ g/Mol aufweist.

## Claims

**1.** Process for the synthesis of a glycerylic poly-hydroxy-urethane compound, **characterised in that**:

- a quantity of at least one acrylic ester of glycerylic cyclo-carbonate and
- a quantity of a first organic amine compound comprising at least one amine group selected from the group formed of a primary amine group ($-NH_2$) and a secondary amine group (-NH-)

are brought into contact under conditions adapted to be able to form a compound, called a glycerylic poly-cyclo-carbonate compound, having at least two glycerylic cyclo-carbonate groups, by addition of the at least one amine group of the first organic amine compound to an ethylenic double bond of the acrylic ester of glycerylic cyclo-carbonate,
and then a step of polymerisation is carried out, in which said glycerylic poly-cyclo-carbonate compound is reacted with a quantity of at least one second organic amine compound comprising at least two amine groups selected from the group formed of a primary amine group ($-NH_2$) and a secondary amine group (-NH-) so as to form the glycerylic poly-hydroxy-urethane compound.

**2.** Process according to claim 1, **characterised in that** each acrylic ester of glycerylic cyclo-carbonate is of the following general formula (F):

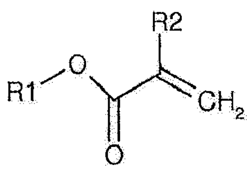

(F)

wherein:

◦ R1 is chosen from the group formed of:

▪ the glycerylic cyclo-carbonate radical having five ring members of the following general formula (G):

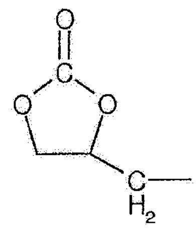

(G),

- the glycerylic cyclo-carbonate radical having six ring members of the following general formula (H):

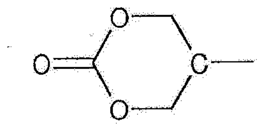

(H);

and

- the poly-glycerylic cyclo-carbonate radicals having five ring members or having six ring members;

◦ R2 is chosen from the group formed of a hydrogen and a methyl group.

**3.** Process according to either claim 1 or claim 2, **characterised in that** the first organic amine compound is an amino-hydrocarbon compound.

**4.** Process according to any one of claims 1 to 3, **characterised in that** the second organic amine compound is an amino-hydrocarbon compound.

**5.** Process according to any one of claims 1 to 4, **characterised in that** the quantity of the acrylic ester(s) of glycerylic cyclo-carbonate(s) and the quantity of first organic amine compound are brought into contact at a temperature of from ambient temperature to 120°C so as to form the glycerylic poly-cyclo-carbonate compound.

**6.** Process according to any one of claims 1 to 5, **characterised in that** the first organic amine compound is chosen from the group formed of:

- 1,2-diaminoethane of the formula $NH_2-(CH_2)_2-NH_2$,
- 1,4-diaminobutane of the formula $NH_2-(CH_2)_4-NH_2$,
- 1,6-diaminohexane of the formula $NH_2-(CH_2)_6-NH_2$,
- 1,8-diaminooctane of the formula $NH_2-(CH_2)_8-NH_2$,
- 1,12-diaminododecane of the formula $NH_2-(CH_2)_{12}-NH_2$,
- 1,16-diaminohexadecane of the formula $NH_2-(CH_2)_{16}-NH_2$,
- N,N'-diethyl-ethylenediamine of the formula $C_2H_5-NH-(CH_2)_2-NH-C_2H_5$,
- diethylenetriamine of the formula $(NH_2-[CH_2]_2-NH-[CH_2]_2-NH_2)$,
- triethylenetetramine of the formula $NH_2-(CH_2)_2-NH-(CH_2)_2-NH-(CH_2)_2-NH_2$,
- pentaethylenehexamine of the formula $(NH_2-[CH_2]_2-NH-[CH_2]_2-NH-[CH_2]_2-NH-[CH_2]_2-NH-[CH_2]_2-NH_2)$, and
- tris(2-aminoethyl)amine of the formula $N[(CH_2)_2-NH_2]_3$.

**7.** Process according to any one of claims 1 to 6, **characterised in that** there is first formed a glycerylic poly-cyclo-carbonate compound having at least two chemical units of the following formula (M):

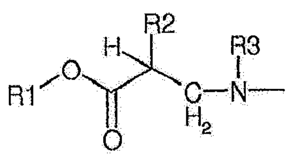

(M)

wherein:

◦ R1 is chosen from the group formed of:

 ▪ the glycerylic cyclo-carbonate radical having five ring members of the following general formula (G):

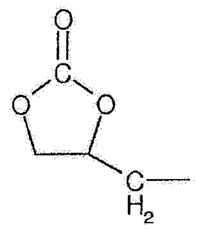

(G),

 ▪ the glycerylic cyclo-carbonate radical having six ring members of the following general formula (H):

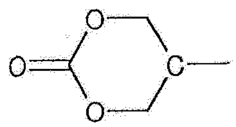

(H);

and

 ▪ the poly-glycerylic cyclo-carbonate radicals having five ring members or having six ring members;

◦ R2 is chosen from the group formed of a hydrogen and a methyl group; and
◦ R3 is an aliphatic hydrocarbon group comprising from 1 to 22 carbon atoms.

**8.** Process according to any one of claims 1 to 7, **characterised in that** the addition of the quantity of the first organic amine compound and then the addition of the quantity of the second organic amine compound are carried out in succession in the same synthesis reactor.

**9.** Process according to any one of claims 1 to 7, **characterised in that** the addition of the quantity of the first organic amine compound and the addition of the quantity of the second organic amine compound are carried out simultaneously in the same synthesis reactor.

**10.** Process according to any one of claims 1 to 9, **characterised in that** there is prepared a solution of the acrylic ester of glycerylic cyclo-carbonate in a solvent medium chosen from the group formed of the dialkyl carbonates and mixtures thereof.

**11.** Process according to any one of claims 1 to 10, **characterised in that** the synthesis of the glycerylic poly-hydroxy-urethane is carried out in the absence of a catalytic system.

**12.** Process according to any one of claims 1 to 11, **characterised in that** the synthesis of the glycerylic poly-hydroxy-urethane compound is carried out with mechanical stirring in a reactor adapted to be able to permit the introduction of the quantity of acrylic ester of glycerylic cyclo-carbonate, the quantity of the first organic amine compound, the quantity of the second organic amine compound and, where appropriate, the solvent compound, and to be able to permit the withdrawal of a suspension of the glycerylic poly-hydroxy-urethane compound formed in a liquid medium containing the first organic amine compound, the second organic amine compound, and separation of said glycerylic poly-hydroxy-urethane compound and of the liquid medium and recycling of said liquid medium in the reactor.

**13.** Process according to any one of claims 1 to 12, **characterised in that** the synthesis of the poly-cyclo-carbonate compound is carried out at a predetermined temperature below each of the boiling temperatures of the acrylic ester of glycerylic cyclo-carbonate, of the first organic amine compound and of the second organic amine compound.

**14.** Glycerylic poly-hydroxy-urethane compound having at least one group chosen from the group formed of:

◦ a group of the following general structure (N):

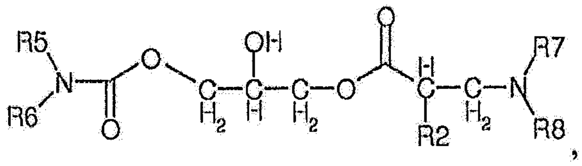

, (N)

comprising a secondary hydroxyl, and
◦ a group of the following general structure (M):

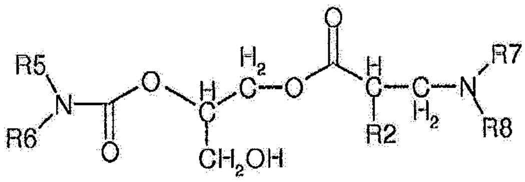

, (M)

comprising a primary hydroxyl,
◦ a group of the following general structure (O):

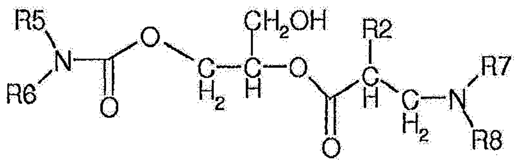

, (O)

comprising a primary hydroxyl,

and wherein

- R2 is chosen from the group formed of a hydrogen and a methyl group, and
- R5, R6, R7 and R8 are chosen independently of one another from the group formed of a hydrogen and an organic substituent formed of carbon, hydrogen, oxygen and nitrogen.

**15.** Compound according to claim 14, **characterised in that** it has a molar mass greater than $2x10^4$ g/mole.

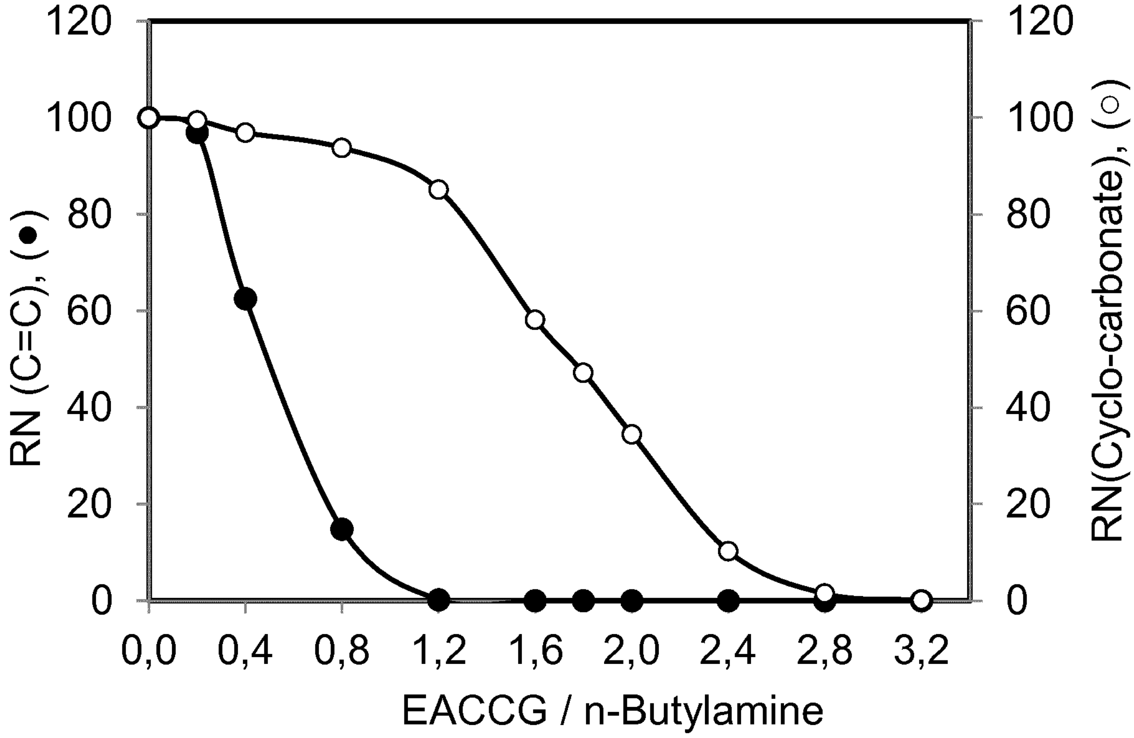
120
100
80
60
40
20
0
RN (C=C), (●)
RN(Cyclo-carbonate), (○)
0,0 0,4 0,8 1,2 1,6 2,0 2,4 2,8 3,2
EACCG / n-Butylamine

Fig 1

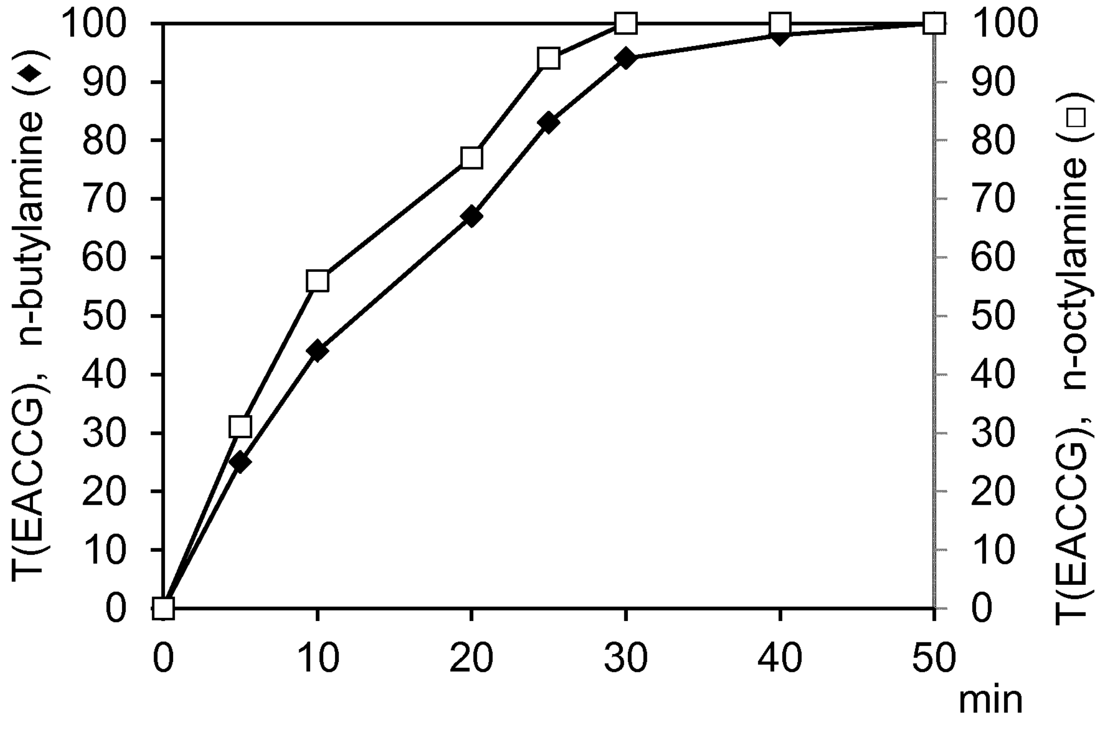
100
90
80
70
60
50
40
30
20
10
0
T(EACCG), n-butylamine (◆)
T(EACCG), n-octylamine (□)
0 10 20 30 40 50
min

Fig 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*


### Documents brevets cités dans la description

- FR 2778182
- FR 2733232

### Littérature non-brevet citée dans la description

- **N. KIHARA ; T. ENDO.** *Journal of Polymer Science,* 1993, vol. 31, 2765-2776
- **WEBSTER D.C. ; CRAIN A.L.** *Progress in Organic Coatings,* 2000, vol. 40, 275-282